(19) Europäisches Patentamt
European Patent Office
Office européen des brevets

(11) **EP 3 350 702 B1**

(12) **EUROPEAN PATENT SPECIFICATION**

(45) Date of publication and mention
of the grant of the patent:
**10.04.2019 Bulletin 2019/15**

(51) Int Cl.:
***G06F 9/50*** (2006.01)

(21) Application number: **16816515.7**

(22) Date of filing: **01.12.2016**

(86) International application number:
**PCT/US2016/064351**

(87) International publication number:
**WO 2017/123335 (20.07.2017 Gazette 2017/29)**

(54) **PROBABILISTIC THROTTLING**

PROBABILISTISCHE DROSSELUNG

ÉTRANGLEMENT PROBABILISTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.01.2016 US 201614996463**

(43) Date of publication of application:
**25.07.2018 Bulletin 2018/30**

(73) Proprietor: **Google LLC
Mountain View, CA 94043 (US)**

(72) Inventors:
• **DROBYCHEV, Alexandre**
**Mountain View, CA 94043 (US)**
• **KESSELMAN, Alexander**
**Mountain View, CA 94043 (US)**
• **SUBBIAH, Arun**
**Mountain View, CA 94043 (US)**

(74) Representative: **Boult Wade Tennant LLP
Verulam Gardens
70 Gray's Inn Road
London WC1X 8BT (GB)**

(56) References cited:
**EP-A1- 2 618 541     US-A1- 2011 231 568**

• **Microsoft: "Exchange workload management:
Exchange 2013 Help", , 16 November 2014
(2014-11-16), XP055342783, Retrieved from the
Internet:
URL:https://technet.microsoft.com/en-us/li
brary/jj150503(d=printer,v=exchg.150).aspx
[retrieved on 2017-02-07]**

**Description**

BACKGROUND

Cold storage systems may provide lower cost data storage in exchange for limited ability to access the data stored. For instance, access to the data may be limited by maximum bandwidth or queries per second (QPS) that can be achieved globally for a single user. These limits may put a cap on the total cost of non-storage resources, e.g., computer processor unit (CPU), memory, or network resources, and allow a storage provider to sustain a low cost data storage offering.

European patent application publication no. EP2618541 describes a communication device and method for throttling transmitted data. Token parameters of an aggregate token bucket, associated with a communication application, are distributed, at a processing unit, to respective application token buckets associated with at least two further applications. The communication application is enabled to receive respective data from the at least two further applications for transmission to a network via a communication interfaces. The respective data received from the at least two further applications is throttled via the respective application token buckets.

SUMMARY

In accordance with aspects of the present invention, there are provided a system, a non-transitory computer readable storage medium and a computer-implemented method as recited in the accompanying claims.

In some implementations, a system includes multiple endpoints and a global throttler. Each of the endpoints may receive requests for different users. As the endpoints receive requests, the endpoints submit bandwidth assignment requests to the global throttler that makes a determination, for each user and each endpoint, how much bandwidth should be assigned to the user by the endpoint. The endpoints use the assigned bandwidth to determine a probability that the request should be processed and repeat the determination until processing the request or determining that a timeout has expired and the user should be notified that the request will not be processed.

For instance, the system may receive twenty read requests for a particular user from twenty different endpoints when the particular user has a maximum bandwidth limit of 2 MB/s, and each request is for 1 MB of data and received by a different endpoint. The global throttler assigns each endpoint 0.1 MB/s bandwidth and provides the assignments to the endpoints that received the requests. The endpoints use the bandwidth assignments to determine a probability of admitting the request.

When the request is not initially admitted, the endpoint may determine, at predetermined intervals, whether to admit the request until the timeout, e.g., a maximum admission latency, expires. For each subsequent determination, the endpoint has a higher probability of admitting the request given that bandwidth available for admitting the request has not been used, e.g., the endpoint uses both the bandwidth assignment and an amount of bandwidth that has not been used to process the request to determine the probability.

If a request is not admitted by an endpoint and the endpoint later receives the same request or a different request for the particular user, the endpoint receives a new assignment for the request and may use the previously accrued bandwidth to determine a new probability of whether or not to admit the request.

In general, one innovative aspect of the subject matter described in this specification can be embodied in methods that include the actions of for each of multiple requests to process data receiving, from a client device for a particular entity, the request to process data, and determining a size of data to be processed when serving the request, for each request in a set of the multiple requests to process data, the set including at least two or more requests to process data, each request in the set of multiple requests corresponding to an entity in a set of entities that includes two or more entities providing, to a throttler system, a bandwidth assignment request indicating the particular entity and the size of data to be processed when serving the request, receiving, from the throttler system, a bandwidth assignment for the particular entity to use when serving the request, and probabilistically determining whether to currently serve the request based on the bandwidth assignment, the size of the data to be processed, and an accrued quantity of tokens for the particular entity on the data processing apparatus, for a first subset of requests from set, in response to probabilistically determining to currently serve the request serving the request, and for a second subset of requests from set, in response to probabilistically determining not to currently serve the request determining whether a predetermined period of time has passed, in response to determining that the predetermined period of time has passed, sending a message to the client device indicating that the request will not be served, or in response to determining that the predetermined period of time has not passed incrementing the accrued quantity of tokens by a quantity of the bandwidth assignment, and re-determining the probabilistically determination whether to currently serve the request. Other embodiments of this aspect include corresponding computer systems, apparatus, and computer programs recorded on one or more computer storage devices, each configured to perform the actions of the methods. A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

In general, one innovative aspect of the subject matter described in this specification can be embodied in methods that include the actions of for each of multiple requests to process data receiving, by an endpoint from a client device for a particular entity, the request to process data, and determining a quantity of requests to be processed by the endpoint for the particular entity, for each request in a set of the multiple requests to process data, the set including at least two or more requests to process data, each request in the set of multiple requests corresponding to an entity in a set of entities that includes two or more entities providing, to a throttler system, an assignment request indicating the particular entity and the quantity of requests to be processed by the endpoint for the particular entity, receiving, from the throttler system, an assignment for the particular entity to use when serving the request, and probabilistically determining whether to currently serve the request based on the assignment, a value of one for the request to be served, and an accrued quantity of tokens for the particular entity on the data processing apparatus, for a first subset of requests from set, in response to probabilistically determining to currently serve the request serving the request, and for a second subset of requests from set, in response to probabilistically determining not to currently serve the request determining whether a predetermined period of time has passed, in response to determining that the predetermined period of time has passed, sending a message to the client device indicating that the request will not be served, or in response to determining that the predetermined period of time has not passed incrementing the accrued quantity of tokens by a quantity of the assignment, and re-determining the probabilistically determination whether to currently serve the request. Other embodiments of this aspect include corresponding computer systems, apparatus, and computer programs recorded on one or more computer storage devices, each configured to perform the actions of the methods. A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

In general, one innovative aspect of the subject matter described in this specification can be embodied in methods that include the actions of for each of multiple requests to process data receiving, from a client device for a particular entity, the request to process data, and determining a size for serving the request, for each request in a set of the multiple requests to process data, the set including at least two or more requests to process data, each request in the set of multiple requests corresponding to an entity in a set of entities that includes two or more entities providing, to a throttler system, an assignment request indicating the particular entity and the size for serving the request, receiving, from the throttler system, an assignment for the particular entity to use when serving the request, and probabilistically determining whether to currently serve the request based on the assignment, the size for serving the request, and an accrued quantity of tokens for the particular entity on the data processing apparatus, for a first subset of requests from set, in response to probabilistically determining to currently serve the request serving the request, and for a second subset of requests from set, in response to probabilistically determining not to currently serve the request determining whether a predetermined period of time has passed, in response to determining that the predetermined period of time has passed, sending a message to the client device indicating that the request will not be served, or in response to determining that the predetermined period of time has not passed incrementing the accrued quantity of tokens by a quantity of the assignment, and re-determining the probabilistically determination whether to currently serve the request. Other embodiments of this aspect include corresponding computer systems, apparatus, and computer programs recorded on one or more computer storage devices, each configured to perform the actions of the methods. A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

The foregoing and other embodiments can each optionally include one or more of the following features, alone or in combination. Probabilistically determining whether to currently serve the request may include probabilistically determining whether to currently serve the request based on the bandwidth assignment, the size of the data to be processed, the accrued quantity of tokens for the particular entity on the data processing apparatus, a maximum admission latency for the data processing apparatus, and an average throttler latency. Probabilistically determining whether to currently serve the request may include determining a probability of serving the request using the bandwidth assignment, the size of the data to be processed, and the accrued quantity of tokens for the particular entity on the data processing apparatus, generating a random number, comparing the random number with the probability to determine whether the random number is greater than the probability, and in response to determining that the random number is not greater than the probability, determining to currently serve the request, or in response to determining that the random number is greater than the probability, determining not to currently serve the request.

In some implementations, the method may include for each request in a second set of the multiple requests to process data that is different than the of the multiple requests, the second set including at least one or more requests to process data determining whether the accrued quantity of tokens for the particular entity on the data processing apparatus is less than the size of the data, and in response to determining that the accrued quantity of tokens for the particular entity on the data processing apparatus is not less than the size of the data, serving the request. Providing, to the throttler system, the bandwidth assignment request indicating the particular entity and the size of data to be processed when serving the request may include providing, to the throttler system, a bandwidth assignment request indicating the particular entity and the size of data to be processed when serving the request in response to determining that the accrued quantity of tokens for the particular entity on the data processing apparatus is less than the size of the data. Re-determining the probabilistically determination whether to currently serve the request may include determining whether the accrued quantity of tokens for the particular entity on the data processing apparatus is less than the size of the data, in response to determining that the accrued quantity of tokens for the particular entity on the data processing apparatus is not less than the size of the data, serving the request, or in response to determining that the accrued quantity of tokens for the particular entity on the data processing apparatus is less than the size of the data, performing the probabilistic determination whether to currently serve the request.

In some implementations, the method may include determining whether the accrued quantity of tokens is a negative value, providing, to the throttler system, an updated bandwidth assignment request indicating the particular entity and the accrued quantity of tokens, receiving, from the throttler system, an updated bandwidth assignment, and incrementing the accrued quantity of tokens by a quantity of the updated bandwidth assignment. Serving the request may include deducting the size of the data to be processed when serving the request from the accrued quantity of tokens. Serving the request may include determining a debt value that indicates a difference between the accrued quantity of tokens and the size of the data to be processed when serving the request, determining whether the debt value exceeds a debt limit, and serving the request in response to determining that the debt value does not exceed the debt limit.

In some implementations, a data processing apparatus may include part of an endpoint in a cloud computing system. In some implementations, a system may include a throttler system. The data processing apparatus may include a device in a group of multiple devices that each send bandwidth assignment requests to the throttler system. Receiving, from the throttler system, the bandwidth assignment for the particular entity to use when serving the request may include receiving a bandwidth assignment determined using the bandwidth assignment requests received by the throttler system for the particular entity from each device in the group of multiple devices. A sum of each of the bandwidth assignment requests for the particular entity sent to each of the devices in the group of multiple devices may equal a bandwidth budget for the particular entity.

In some implementations, the method may include receiving an updated bandwidth assignment. Re-determining the probabilistically determination whether to currently serve the request may include probabilistically determining whether to currently serve the request using the updated bandwidth assignment, the size of the data to be processed, and the accrued quantity of tokens for the particular entity on the data processing apparatus. Receiving the request to process data for the particular entity may include receiving one of a read request or a write request. Receiving the request to process data for the particular entity may include receiving a request for a particular user. Receiving the request to process data for the particular entity may include receiving a request for a particular company. Serving the request may include determining a response to the request, and providing the response to the client device. Re-determining the probabilistically determination whether to currently serve the request may include re-determining the probabilistically determination whether to currently serve the request until the predetermined period of time has passed. The set of the multiple requests may include each of the requests in the multiple requests.

In some implementations, probabilistically determining whether to currently serve the request may include probabilistically determining whether to currently serve the request based on the assignment, the size for serving the request, the accrued quantity of tokens for the particular entity on the data processing apparatus, a maximum admission latency for the data processing apparatus, and an average throttler latency. Probabilistically determining whether to currently serve the request may include determining a probability of serving the request using the assignment, the size for serving the request, and the accrued quantity of tokens for the particular entity on the data processing apparatus, generating a random number, comparing the random number with the probability to determine whether the random number is greater than the probability, and in response to determining that the random number is not greater than the probability, determining to currently serve the request, or in response to determining that the random number is greater than the probability, determining not to currently serve the request.

In some implementations, the method may include for each request in a second set of the multiple requests to process data that is different than the of the multiple requests, the second set including at least one or more requests to process data determining whether the accrued quantity of tokens for the particular entity on the data processing apparatus is less than the size for serving the request, and in response to determining that the accrued quantity of tokens for the particular entity on the data processing apparatus is not less than the size for serving the request, serving the request. Providing, to the throttler system, the assignment request indicating the particular entity and the size for serving the request may occur in response to determining that the accrued quantity of tokens for the particular entity on the data

4

processing apparatus is less than the size for serving the request. Re-determining the probabilistically determination whether to currently serve the request may include determining whether the accrued quantity of tokens for the particular entity on the data processing apparatus is less than the size for serving the request, in response to determining that the accrued quantity of tokens for the particular entity on the data processing apparatus is not less than the size for serving the request, serving the request, or in response to determining that the accrued quantity of tokens for the particular entity on the data processing apparatus is less than the size for serving the request, performing the probabilistic determination whether to currently serve the request.

In some implementations, the method may include determining whether the accrued quantity of tokens is a negative value, providing, to the throttler system, an updated assignment request indicating the particular entity and the accrued quantity of tokens, receiving, from the throttler system, an updated assignment, and incrementing the accrued quantity of tokens by a quantity of the updated assignment. Serving the request may include deducting the size for serving the request from the accrued quantity of tokens. Serving the request may include determining a debt value that indicates a difference between the accrued quantity of tokens and the size for serving the request, determining whether the debt value exceeds a debt limit, and serving the request in response to determining that the debt value does not exceed the debt limit. A data processing apparatus may include a device in a group of multiple devices that each send assignment requests to the throttler system. Receiving, from the throttler system, the assignment for the particular entity to use when serving the request may include receiving an assignment determined using the assignment requests received by the throttler system for the particular entity from each device in the group of multiple devices. A sum of each of the assignment requests for the particular entity sent to each of the devices in the group of multiple devices may equal a budget for the particular entity. The method may include receiving an updated assignment. Re-determining the probabilistically determination whether to currently serve the request may include probabilistically determining whether to currently serve the request using the updated assignment, the size for serving the request, and the accrued quantity of tokens for the particular entity on the data processing apparatus.

In some implementations, determining the size for serving the request may include determining a size of data to be processed when serving the request. Providing, to the throttler system, the assignment request indicating the particular entity and the size for serving the request may include providing, to the throttler system, a bandwidth assignment request indicating the particular entity and the size of data to be processed when serving the request. Receiving, from the throttler system, the assignment for the particular entity to use when serving the request may include receiving, from the throttler system, a bandwidth assignment for the particular entity to use when serving the request. Probabilistically determining whether to currently serve the request based on the assignment, the size for serving the request, and the accrued quantity of tokens for the particular entity on the data processing apparatus may include probabilistically determining whether to currently serve the request based on the bandwidth assignment, the size of the data to be processed, and the accrued quantity of tokens for the particular entity on the data processing apparatus. Determining the size for serving the request may include determining a quantity of requests to be processed by an endpoint that includes the data processing apparatus for the particular entity. Providing, to the throttler system, the assignment request indicating the particular entity and the size for serving the request may include providing, to the throttler system, an assignment request indicating the particular entity and the quantity of requests to be processed by the endpoint for the particular entity. Probabilistically determining whether to currently serve the request based on the assignment, the size for serving the request, and the accrued quantity of tokens for the particular entity on the data processing apparatus may include probabilistically determining whether to currently serve the request based on the assignment, a value of one for the request to be served, and the accrued quantity of tokens for the particular entity on the data processing apparatus.

The subject matter described in this specification can be implemented in particular embodiments and may result in one or more of the following advantages. In some implementations, the systems and methods described below make faster admission decisions, make global admission decisions, minimize periods of budget under-utilization, ensure that clients do not exceed a bandwidth budget on average over longer periods of time, or a combination of two or more of these, compared to other systems. For example, a global throttler allows a data storage system to determine bandwidth assignments for a particular user or client device for each endpoint. In some examples, when an endpoint allows a particular user or client device to go into debt, the endpoint minimizes periods of budget under-utilization and allows servicing of requests that might not otherwise be serviced. In some examples, an endpoint may have a maximum debt threshold to ensure that clients do not exceed a bandwidth budget on average over longer periods of time. In some implementations, the systems and methods described below report demand to a throttler system when a token bucket for a particular user or client device has a negative value to ensure that the token bucket will get a non-zero refill rate and that an endpoint will eventually have enough bandwidth to cover the debt for the particular user or client device.

The details of one or more implementations of the subject matter described in this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is an example of an environment in which a data storage system services requests from client devices.
FIG. 2 is a flow diagram of a process for probabilistically determining whether to serve a request.
FIG. 3 is a flow diagram of a process for determining whether to serve a request.
FIG. 4 is a flow diagram of a process for incrementing a quantity of tokens.
FIG. 5 is a block diagram of a computing system that can be used in connection with computer-implemented methods described in this document.

Like reference numbers and designations in the various drawings indicate like elements.

DETAILED DESCRIPTION

Example Data Storage System

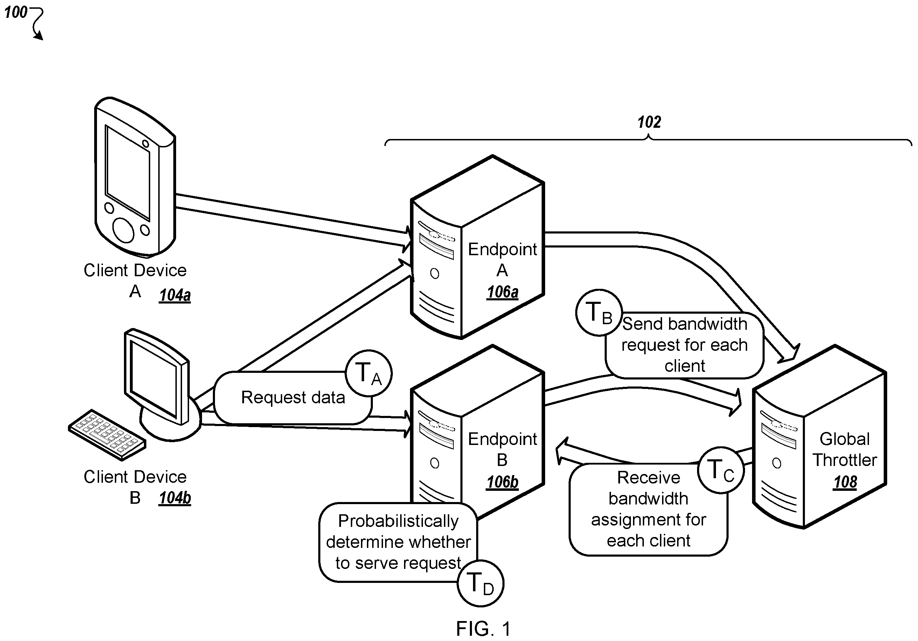

FIG. 1 is an example of an environment 100 in which a data storage system 102 services requests from client devices A-B 104a-b. The environment 100 includes multiple client devices A-B 104a-b that each send data requests, during time period $T_A$, to one or more endpoints A-B 106a-b in the data storage system 102. For instance, the client device B 104b may request two different sets of data, a first data set from the endpoint A 106a and a second data set from the endpoint B 106b.

The endpoints A-B 106a-b report their currently observed demand for a particular entity, e.g., for each currently active entity, to a global throttler 108 included in the data storage system 102, during time $T_B$. For example, during time $T_B$, each of the endpoints A-B 106a-b send bandwidth requests for client data requests received from the client devices A-B 104a-b that are outstanding. The client data requests that are outstanding include data requests received during time period $T_A$, e.g., for the time period immediately prior to the time period $T_B$. In some examples, the client data requests that are outstanding may include requests received prior to the time period $T_A$ that are waiting to be serviced.

In the examples below we may refer to bandwidth assignments per client device but bandwidth assignments may be per entity, e.g., per user. In these examples, a bandwidth assignment concerns a value that specifies a network bandwidth, e.g., in MB/s. For instance, when bandwidth assignments are per entity, an organization may have multiple client devices that each request data from the data storage system 102. The data storage system 102 has a maximum bandwidth for the organization and applies the maximum bandwidth to the requests received from the organization's client devices, as described in more detail below.

The global throttler 108 sends bandwidth assignments to the endpoints A-B 106a-b during time period Tc. For example, as described in more detail below, the global throttler 108 may determine the bandwidth assignments for each entity, e.g., for each client device A-B 104a-b, and each endpoint A-B 106a-b. The global throttler 108 may assign a maximum available bandwidth for the client device A 104a to the endpoint A 106a because the endpoint A 106a is the only endpoint which received a data request from the client device A 104a and that has an outstanding request for the client device A 104a. The maximum available bandwidth may be determined based on a rule for the client device A 104a, e.g., a maximum bandwidth for which the client device A 104a has subscribed, or a rule for the data storage system 102, e.g., a maximum bandwidth available to any client device that requests data from the data storage system 102.

The global throttler 108 assigns a bandwidth budget for the client device B 104b to each of the endpoints A-B 106a-b. For instance, when the maximum bandwidth for the client device B 104b is 3 MB/s, the global throttler 108 may assign a bandwidth budget of 1.5 MB/s to each of the endpoints A-B 106a-b.

A sum of all the assignments sent by the global throttler 108 for a particular client device or user and to each of the endpoints A-B 106a-b equals a bandwidth budget, e.g., a maximum bandwidth budget, for the particular client device or user. The global throttler 108 may determine the assignments for each of the endpoints A-B 106a-b for the particular client device or user.

The global throttler 108 provides the bandwidth budgets to the endpoints A-B 106a-b during time period Tc. For example, the global throttler 108 sends a message to the endpoint A 106a that includes the bandwidth assignments for each of the client devices A-B 104a-b, specific to the endpoint A 106a when bandwidth assignments for a particular client device vary between endpoints, and sends a second message to the endpoint B 106b that includes the bandwidth assignment for the client device B 104b.

During time period $T_D$, each of the endpoints A-B 106a-b probabilistically determine whether to serve the pending requests that are outstanding for the respective endpoint. The endpoint B 106b, for example, may determine whether to serve the request received from the client device B 104b during time period $T_A$ and any other requests that have not been processed and that were received prior to the time period $T_A$. In some examples, each of the endpoints A-B 106a-b may use a different method to probabilistically determine whether to serve a request.

In some examples, the global throttler 108 may distribute a bandwidth budget for a particular client device equally among endpoints or proportionally to the demand reported by the endpoints A-B 106a-b. For instance, when the global throttler 108 receives bandwidth allocation requests from three endpoints for a demand of 1 MB, 2 MB, and 3 MB, respectively, and the bandwidth budget is 3 MB/s for the corresponding client device, then the global throttler 108 will send bandwidth assignments of 0.5 MB/s, 1 MB/s and 1.5 MB/s, respectively, to the endpoints. These assignments have the effect that the total bandwidth budget is not exceeded. The global throttler providing the assignments within an average of two seconds has a technical effect that each request may be serviced within an average of four seconds.

In some implementations, the global throttler 108 may start by determining that each serving endpoint should be assigned its full demand, e.g., for data requested by a client device, and then proceed with reducing the highest assignment until the sum of all assignments equals the budget for the client device. Using the example above, the global throttler 108 would send an assignment of 1 MB/s to each of the three endpoints.

In some implementations, the global throttler may have a minimum demand level for one or more of the endpoints A-B 106a-b. For instance, each of the endpoints may have the same minimum demand level or different minimum demand levels. In some examples, each of the endpoints in the data storage system 102 may have a minimum demand of 1 MB/s. In these examples, the global throttler 108 may assign each of the endpoints the minimum demand and then determine whether there is any difference between an accumulated minimum demand and the maximum bandwidth budget for the entity. For instance, when the minimum demand for each endpoint is 1 MB/s, the bandwidth budget is 3 MB/s for the entity, and the global throttler 108 receives three bandwidth requests for the entity, the global throttler 108 assigns each of the endpoints bandwidth assignments of 1 MB/s.

When the bandwidth budget for the entity is 3.5 MB/s, and the bandwidth assignment requests are for 1 MB, 2 MB, and 3 MB, then the global throttler 108 assigns the minimum demand to each of the endpoints, e.g., 1 MB/s, and then assigns the remaining bandwidth, e.g., 0.5 MB/s, to the endpoints. The global throttler 108 determines that the second and third endpoints have remaining demands of 1 MB and 2 MB, respectively, and assigns the remaining 0.5 MB/s of bandwidth to these endpoints. For instance, the global throttler may assign 0.25 MB/s of additional bandwidth to each of the second endpoint and the third endpoint for final bandwidth assignments of 1 MB/s, 1.25 MB/s, and 1.25 MB/s, respectively. In some examples, the global throttler 108 may assign 0.167 MB/s to the second endpoint and 0.333 MB/s to the third endpoint for final bandwidth assignments of 1 MB/s, 1.167 MB/s, and 1.333 MB/s, respectively.

Each of the endpoints A-B 106a-b maintains a token bucket for every client device from which the endpoint has received a request, e.g., for each active client device or user. When one of the endpoints A-B 106a-b receives a bandwidth assignment from the global throttler 108 for a particular client device, the endpoint uses the bandwidth assignment for the particular client device as the fill rate for the token bucket for the client device, e.g., until the endpoint receives another bandwidth assignment for the particular client device from the global throttler 108. The fill rate is the rate by which the endpoint updates the value for the token bucket for the client device.

When an endpoint receives a request from a client device, the endpoint determines a number of bytes to be processed when serving the request. For instance, if the request is a read request, the endpoint determines the number of bytes that the endpoint will provide to the client device in response to the request. The endpoint compares the number of bytes to be processed when serving the request against the number of tokens in the token bucket for the client device. When the endpoint determines that the number of bytes to be processed when serving the request is less than or equal to the number of tokens in the token bucket for the client device, the endpoint may admit the request, e.g., determine to serve the request, and deduct the number of bytes to be processed when serving the request from the tokens in the token bucket for the client device.

When the endpoint determines that the number of bytes to be processed when serving the request is greater than the number of tokens in the token bucket for the client device, the endpoint probabilistically determines whether to admit the request, e.g., whether to immediately serve the request. For instance, the endpoint may probabilistically determine whether to admit the request for the client device using the current bandwidth assignment for the client device, the number of tokens in the token bucket for the client device, and the number of tokens needed to serve the request, e.g., the number of bytes to be processed when serving the request. This has the technical effect, that a request which exceeds a bandwidth budget and which may not be served by conventional throttling technologies may still be serviced.

If the endpoint probabilistically determines to admit the request, e.g., to begin serving the request, the endpoint deducts the number of bytes to be processed when serving the request for the client device from the token bucket for the client device, bringing the token bucket for the client device into a negative state, e.g., a state of debt. The value for the token bucket may be a measure of a size, e.g., bits, bytes, megabytes, gigabytes, terabytes, or another appropriate quantity of data.

If the endpoint probabilistic determination does not result in admittance of a request, the endpoint might not decline the request. The endpoint places the request in a queue, and repeats the probabilistic determination according to a schedule, e.g., once every predetermined time interval. For instance, the endpoint may perform the probabilistic determination once every second for a client device's request until the request is admitted or an admission deadline for the request passes, e.g., until a predetermined period of time has passed.

When the admission deadline for the request passes, the endpoint declines the request. The endpoint may send a message to the client device indicating that the request will not be served.

As the endpoint repeats the probabilistic determination, the endpoint may use different bandwidth assignments, quantities of tokens, or both. For instance, the endpoint updates the quantity of tokens in the token bucket for the particular client device or user after each time the probabilistic determination is performed by increasing the quantity of tokens in the token bucket by the amount of the bandwidth assignment.

The endpoint may receive an updated bandwidth assignment for the client device from the global throttler 108. For instance, after performing the probabilistic determination the endpoint may receive an updated bandwidth assignment from the global throttler in response to one of the endpoints receiving a request for the client device, one of the endpoints completing servicing of a request for the client device and having a non-negative token bucket for the client device, or both.

In some examples, the endpoint A 106a may receive a request from the client device B 104b during a first time period and probabilistically determine not to serve the request. The endpoint B 106b receives a request from the client device B 104b during a second time period, after the first time period, and sends a bandwidth assignment request to the global throttler 108. The global throttler 108 determines that the request for the client device B 104b is still outstanding on the endpoint A 106a and determines bandwidth assignments for both the endpoint A 106a and the endpoint B 106b using the bandwidth assignment requests received from each of the endpoints A-B 106a-b. The endpoints A-B 106a-b receive the bandwidth assignments from the global throttler 108 and use the assignments to probabilistically determine whether to serve the respective requests from the client device B 104b. For instance, the endpoint A 106a uses the newly received bandwidth assignment to probabilistically determine whether to admit the request for the client device B 104b.

The endpoint may receive an updated bandwidth assignment whether or not the endpoint determines to service a request. For instance, the endpoint may receive an updated bandwidth assignment after determining to service a request for a client device. The endpoint may receive an updated bandwidth assignment after determining not to immediately service a request for a client device.

In some implementations, an endpoint may use Equation (1) below as part of the process to perform the probabilistic determination. For instance, an endpoint may use Equation (1) to determine an admission probability, AdmProb, which is a probability that a request for a client device is admitted. When AdmProb is greater than or equal to one, the endpoint admits the request, e.g., services the request. When AdmProb is between one and zero, the endpoint continues to perform the probabilistic determination of whether to admit the request. AdmProb may be any appropriate value, e.g., an integer, have an absolute value greater than one for which a corresponding request is not automatically admitted, a negative value, or a combination of two or more of these.

$$AdmProb = (-\ln(eps) / (MaxAdmLat - AvgThrottlerLat)) * (Asgn / Debt) \quad (1)$$

An endpoint may determine eps as the maximum probability that the endpoint receives $N$ requests at the same time, e.g., from different client devices, and all of the requests are declined. For instance, the endpoint may determine eps for a value of $N$ equal to one thousand. In some examples, the value of $N$ is the maximum number of requests an endpoint could receive for a particular client device. In some implementations, an endpoint may define eps as a value less than or equal to 0.001. An administrator may define the value of eps.

An endpoint determines MaxAdmLat as the maximum admission latency. MaxAdmLat may be the maximum amount of time between when a request is received from a client device and the endpoint responds to the request, e.g., to indicate that the request has or has not been admitted. For instance, the endpoint may continue to perform a probabilistic determination, when the result of each determination is that a request will not be admitted, until expiration of the maximum admission latency from the receipt of the corresponding request from the client device, at which time the endpoint will send a message to the client device indicating that the request was not admitted and that the endpoint will not service the request.

An endpoint may determine AvgThrottlerLat as the average latency for getting a bandwidth assignment from the global throttler 108. An endpoint may determine Asgn as the current bandwidth assignment for the client, i.e., the current bandwidth assignment for which the endpoint is performing the probabilistic determination of whether or not to admit a request. An endpoint may determine Debt as the current debt, e.g., negative number of tokens in a token bucket for the client device that would be created if the request is admitted. Use of the above values for AvgThrottlerLat, Asgn, and Debt by an endpoint has the technical effect that the likelihood that a request is served decreases with an increase of the current debt, so that client devices do not exceed a bandwidth budget on average over longer periods of time. Furthermore, since the evaluation of equation can be fast, a decision of the admission of a request can be fast, e.g., an endpoint can make a decision using the equation without waiting for a decision from the global throttler.

For example, then endpoint B 106b may receive a read request from the client device B 104b that has a bandwidth limit of 2 MB/s. The read request is one of twenty read requests each received by a different endpoint in the data storage system 102 during a particular period of time, e.g., the same one second time interval, each read request for 1 MB of data. Each of the endpoints, including the endpoint B 106b, send a bandwidth request for the client device B 104b to the global throttler 108 indicating a demand of 1 MB. The global throttler 108 determines the bandwidth limit of 2 MB/s for the client device B 104b and determines a bandwidth assignment for each of the endpoints of 0.1 MB/s. The global throttler 108 sends the bandwidth assignment to each of the endpoints, including the endpoint B 106b. Assuming that AvgThrottlerLat is two seconds, each of the endpoints will receive the bandwidth assignment within two seconds of sending the bandwidth assignment requests to the global throttler 108.

The endpoint B 106b determines that the client device B 104b does not have any current debt on the endpoint B 106b so the debt after admitting the request would be the amount of data processed for the request, e.g., Debt is equal to 1 MB, and that MaxAdmLat is four seconds. The endpoint B 106b uses eps equal to 0.001 to determine AdmProb = -ln(0.001) / 2s * 0.1MB/s / 1MB = 0.35. The endpoint B 106b uses AdmProb = 0.35 to probabilistically determine whether to admit the request. For example, the endpoint B 106b generates a random number between zero and one and compares the generated random number with AdmProb. If the generated random number satisfies AdmProb, e.g., is less than or equal to AdmProb, the endpoint B 106b determines to admit the request, e.g., serve the request. If the generated random number does not satisfy AdmProb, e.g., is greater than AdmProb, the endpoint B 106b determines not to currently admit the request.

In response to a determination not to admit a request, the endpoint B 106b determines whether the MaxAdmLat period of time has passed since receiving the request. In this example, when the actual throttler latency is two seconds and each determination takes one second, three seconds have passed and MaxAdmLat is four seconds.

When the endpoint B 106b determines that MaxAdmLat has not passed, the endpoint B 106b again probabilistically determines whether to admit the request. For instance, the endpoint B 106b increments the quantity of tokens for the client device B 104b by the bandwidth assignment, e.g., by 0.1 to a total token value of 0.1 MB in the token bucket for the client device B 104b. The endpoint B 106b determines the amount of debt that would be accrued if the request is admitted, e.g., 0.1 MB of tokens minus 1 MB required to service the request results in a Debt value of 0.9 MB.

The endpoint B 106b uses Equation (1) to determine AdmProb = -ln(0.001) / 2s * 0.1MB/s / 0.9MB = 0.39 and generates another random number. The endpoint B 106b compares the other random number with the updated value of AdmProb = 0.39 to probabilistically determine whether to admit the request. If the endpoint B 106b probabilistically determines to admit the request, the endpoint B 106b determines data responsive to the request, e.g., serves the request, and provides the data to the client device B 104b or stores the data in a data storage. If the endpoint B 106b probabilistically determines not to admit the request, the endpoint B 106b sends a message to the client device B 104b indicating that the request will not be served, e.g., since the maximum admission latency has expired.

The client devices A-B 104a-b may include personal computers, mobile communication devices, and other devices that can send and receive data over a network. The network, such as a local area network (LAN), wide area network (WAN), the Internet, or a combination thereof, connects the client devices A-B 104a-b and the endpoints A-B 106a-b. In some implementations, the network connects the endpoints A-B 106a-b and the global throttler 108.

We refer to a single endpoints A-B 106a-b in the foregoing text, but implementations of the environment 100 may use a single endpoint computer or multiple endpoint computers operating in conjunction with one another, including, for example, a set of remote computers deployed as a cloud computing service. We refer to a single global throttler 108 in the foregoing text, but implementations of the environment 100 may use a single global throttler computer or multiple global throttler computers operating in conjunction with one another, including, for example, a set of remote computers deployed as a cloud computing service.

Example Process Flows

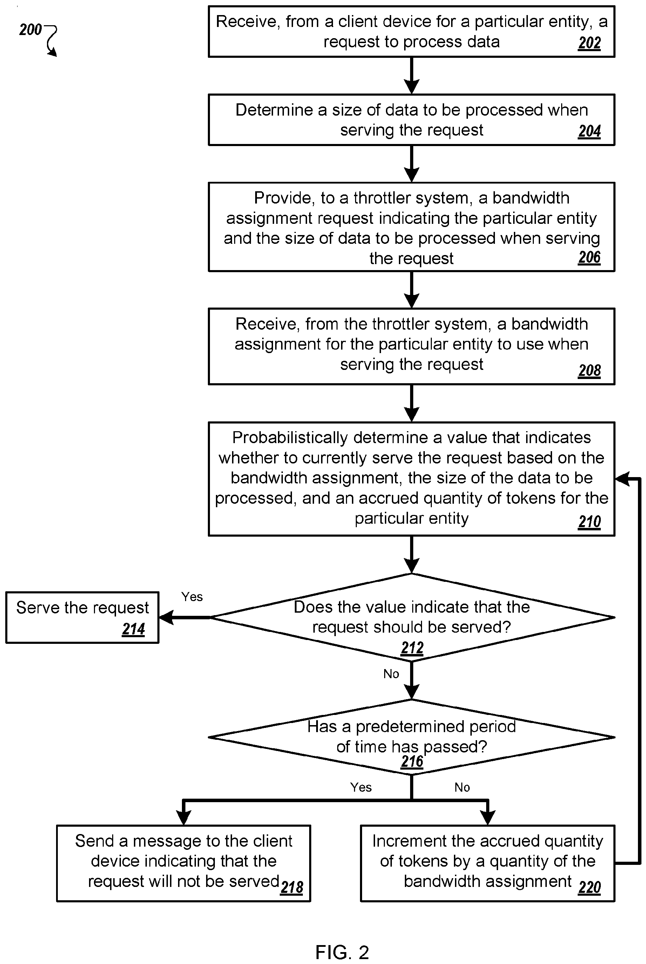

FIG. 2 is a flow diagram of a process 200 for probabilistically determining whether to serve a request. For example, the process 200 can be used by one or both of the endpoints A-B 106a-b from the environment 100.

An endpoint receives, from a client device for a particular entity, a request to process data (202). A request to process data can be, for example, a request to read or write data from/to data storage. For instance, the endpoint receives a read or a write request from the client device. The particular entity may be the client device or a user of the client device. In some examples, the particular entity may be an entity, such as an organization, that owns the client device.

The endpoint determines a size of data to be processed when serving the request (204), which means to determine a size for serving the request. For example, the endpoint determines a number of bytes or bits that will be read from a data storage, and provided to the client device, or are received from the client device and will be written to a data storage.

In some implementations, the endpoint determines a size for serving the request. The size may be a resource unit per second, e.g., MB/s or requests per second. The size for serving the request may be a size of data to be processed, a number of requests received for a particular entity, a number of requests received for a particular entity during a period of time, e.g., one second, a number of requests received by the endpoint for a particular entity, or another appropriate value for serving the request. The endpoint uses the size for serving the request to probabilistically determine whether to serve the request.

The endpoint provides, to a throttler system, a bandwidth assignment request indicating the particular entity and the size of data to be processed when serving the request (206). The endpoint may include data that indicates the client device as the particular entity. In some examples, the endpoint includes data that indicates a user of the client device as the particular entity.

The endpoint receives, from the throttler system, a bandwidth assignment for the particular entity to use when serving the request (208). For instance, the throttler system receives bandwidth assignment requests from multiple different endpoints. The throttler system uses the bandwidth assignment requests to determine which requests are for the particular entity. The throttler system determines a maximum bandwidth allotted to the particular entity. The throttler system uses the maximum bandwidth allotted to the particular entity and the bandwidth assignment requests for the particular entity to determine bandwidth assignments for each of the endpoints from which the throttler system received bandwidth assignment requests for the particular entity. The throttler system provides the bandwidth assignments for the particular entity to each of the endpoints, e.g., the same bandwidth assignment or different bandwidth assignments.

The bandwidth assignment may be a value of any appropriate type. For example, the bandwidth assignment may be bytes per second, bits per second, megabytes per second, or gigabytes per second.

The endpoint probabilistically determines a value that indicates whether to currently serve the request based on the bandwidth assignment, the size of the data to be processed, and an accrued quantity of tokens for the particular entity (210). For example, the endpoint determines a Boolean value that indicates whether the endpoint should serve the request. The accrued quantity of tokens may be a value in any appropriate unit. For instance, an accrued quantity of tokens may be a value in bits, bytes, megabytes, gigabytes, terabytes, or another appropriate quantity of data.

In some examples, the endpoint generates a first value that represents a probability that the endpoint should serve the request. The endpoint generates a second value randomly, e.g., using a random number generator, and compares the first value with the second value to probabilistically determine whether the endpoint should serve the request. In these examples, the endpoint may generate a Boolean value that is a result of the comparison of the first value and the second value and use the Boolean value as the value. In some implementations, the endpoint may use the second value as the value.

The endpoint determines whether the value indicates that the request should be served (212). For instance, the endpoint determines whether the Boolean value is true or false. In some examples, the endpoint determines whether the second value satisfies, e.g., is less than or equal to, the first value.

In response to determining that the value indicates that the request should be served, the endpoint serves the request (214). For instance, the endpoint retrieves the requested data from the data storage and provides the retrieved data to the client device, e.g., in response to a read request. In some examples, the endpoint stores received data in a data storage, e.g., in response to receipt of a write request.

In response to determining that the value indicates that the request should not be served, the endpoint determines whether a predetermined period of time has passed (216). For instance, the endpoint determines whether a period of time for a maximum admission latency has passed.

In response to determining that the predetermined period of time has passed, the endpoint sends a message to the client device indicating that the request will not be served (218). For example, the endpoint sends a message to the client device that identifies the request and indicates that the request will not be served at this time. The endpoint may later receive another request from the client device requesting the same action be performed, e.g., the same data read from the data storage and provided to the client device or the same data written to the data storage.

When the endpoint later receives another request from the client device after probabilistically determining not to serve a request, the endpoint may have accumulated tokens in a token bucket for the particular entity, e.g., and have a higher probability of serving the other request. For instance, if the endpoint accumulates 0.2 MB in a token bucket for the particular entity and determines not to serve a request from the client device, the endpoint maintains the 0.2 MB in the token bucket and uses those tokens during a later probabilistic determination of whether to serve the other request from the client device, e.g., when the endpoint does not receive any intervening requests from the client device, for the particular entity, or both. The endpoint then has a higher probability of serving the other request for the particular entity.

In response to determining that the predetermined period of time has not passed, the endpoint increments the accrued quantity of tokens by a value determined using a quantity of the bandwidth assignment (220). For instance, the endpoint may determine the value by multiplying the quantity of the bandwidth assignment with the length of the predetermined period of time. The endpoint proceeds to probabilistically determine a second value that indicates whether to currently serve the request based on the bandwidth assignment, the size of the data to be processed, and the updated quantity of tokens for the particular entity. The endpoint may determine the second value using an updated bandwidth assignment, e.g., received from the throttler system.

The order of steps in the process 200 described above is illustrative only, and probabilistically determining whether to serve the request can be performed in different orders. For example, the endpoint may increment an accrued quantity of tokens for the particular entity prior to probabilistically determining the value that indicates whether to currently serve the request.

In some implementations, the process 200 can include additional steps, fewer steps, or some of the steps can be divided into multiple steps. For example, the endpoint may perform the process 200 without performing steps 216 and 218, e.g., without a maximum admission latency. In these examples, the endpoint continues to perform a probabilistic determination whether to serve a request until the request is served, until receiving a message from the client device that indicates that the request should not be served, or both. In some implementations, the endpoint may perform the process 300 or the process 400, described in more detail below, as part of the process 200.

In some implementations, the endpoint may receive an updated bandwidth assignment from the throttler system. For instance, the endpoint may receive a first bandwidth assignment, perform a first probabilistic determination using the first bandwidth assignment that results in the endpoint not serving the request, and then receive a second bandwidth assignment from the throttler system. The endpoint may perform a second probabilistic determination whether to serve the request using the second bandwidth assignment, e.g., and the size of the data to be processed and the accrued quantity of tokens for the particular entity.

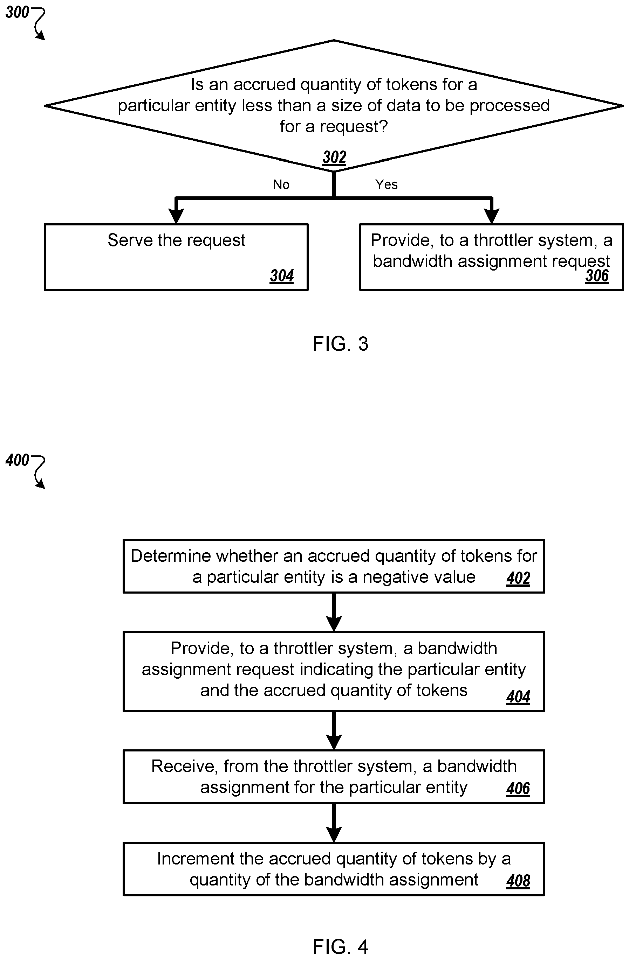

FIG. 3 is a flow diagram of a process 300 for determining whether to serve a request. For example, the process 300 can be used by one or both of the endpoints A-B 106a-b from the environment 100.

An endpoint determines whether an accrued quantity of tokens for a particular entity less than a size of data to be processed for a request (302). For example, the endpoint receives a request from a client device for the particular entity. The endpoint determines the size of data to be read or written to serve the request. The endpoint compares the size of the data to be read or written with an accrued quantity of tokens in a token bucket for the particular entity.

In response to determining that the accrued quantity of tokens for the particular entity is not less than the size of the data, the endpoint serves the request (304). For instance, the endpoint retrieves the data requested for a read request and provides the data to the client device. In some examples, the endpoint writes data received from the client device in a data storage. The endpoint serves the request without requesting a bandwidth assignment from the throttler system because the accrued quantity of tokens is greater than or equal to the size of the data to be processed for the request.

In response to determining that the accrued quantity of tokens for the particular entity is less than the size of the data, the endpoint provides, to a throttler system, a bandwidth assignment request (306). For example, the endpoint determines that the request should not be immediately served and to probabilistically determine whether to serve the request.

In some implementations, the process 300 can include additional steps, fewer steps, or some of the steps can be divided into multiple steps. For example, the endpoint may perform the process 300 as part of step 206 in the process 200 described above.

FIG. 4 is a flow diagram of a process 400 for incrementing a quantity of tokens. For example, the process 400 can be used by one or both of the endpoints A-B 106a-b from the environment 100.

An endpoint determines whether an accrued quantity of tokens for a particular entity is a negative value (402). For instance, after serving a request for the particular entity, e.g., for a particular client device or a particular user, the endpoint determines that the accrued quantity of tokens in a token bucket for the particular entity is negative.

The endpoint provides, to a throttler system, a bandwidth assignment request indicating the particular entity and the accrued quantity of tokens (404). For example, the endpoint provides the throttler system with an identification of the particular entity and the negative quantity of tokens. The endpoint may provide the bandwidth assignment request to the throttler system irrespective of whether the endpoint has an outstanding request for the particular entity.

The endpoint receives, from the throttler system, a bandwidth assignment for the particular entity (406). For instance, the throttler system uses the bandwidth assignment request for the particular entity and from the endpoint with other bandwidth assignment requests for the particular entity received from other endpoints to determine bandwidth assignments for the particular entity. The throttler system may send each of the endpoints a different bandwidth assignment for the particular entity or the same bandwidth assignment.

The endpoint increments the accrued quantity of tokens by a quantity of the bandwidth assignment (408). For example, the endpoint increment the accrued quantity of tokens in the token bucket for the particular entity by the amount indicated in the bandwidth assignment received from the throttler system. The endpoint may increment the accrued quantity of tokens in the token bucket for the particular entity once for each time interval, e.g., each one second time interval, until receipt of an updated bandwidth assignment for the particular entity, the accrued quantity of tokens is no longer negative, or both. If the endpoint receives an updated bandwidth assignment for the particular entity, the endpoint performs step 408 using the updated bandwidth assignment.

In some implementations, the process 400 can include additional steps, fewer steps, or some of the steps can be divided into multiple steps. For example, the endpoint may perform the process 400 after performing the process 200 or may perform the process 400 alone.

Optional Implementation Details

In some implementations, the global throttler communicates with the endpoints periodically, e.g., once a second. The global throttler may communicate with the endpoints on a best-effort basis.

In some implementations, if the amount of debt for the client device would exceed a threshold amount of debt after deducting the number of bytes to be processed when serving the request for the client device from the token bucket for the client device, the endpoint determines not to service the request. For example, the endpoint does not perform the probabilistic determination and sends a message to the client device indicating that the request will not be serviced. In these examples, the endpoint may determine the amount of debt accrued if a request were serviced before performing the probabilistic determination and perform the probabilistic determination in response to determining that the amount of debt does not satisfy the threshold amount of debt, e.g., is greater than or equal to the threshold amount of debt.

In some examples, the threshold amount of debt, e.g., maximum debt threshold, may be a negative debt value. The data storage system may select the maximum debt threshold to provide a smooth throttling experience for entities that request data from the data storage system. For instance, the threshold amount may be -1 MB. When an endpoint determines that the amount of debt that will be accrued by serving a request is less than the threshold amount, the endpoint does not serve the request.

In some implementations, an endpoint may receive multiple requests from a particular client device, for a particular entity, or both. In these implementations, the endpoint determines the demand for the particular client device or the particular entity as a sum of the sizes of the data to be processed to serve each of the requests.

In some implementations, an endpoint may reset a token bucket to zero. For instance, the endpoint may reset a token bucket for a particular entity to zero after a predetermined period of time from which the endpoint received a request for the particular entity, served a request for the particular entity, or sent a message to the particular entity, e.g., indicating that a request would not be served. The endpoint may reset the token bucket when the bucket has a positive number of tokens or a negative number of tokens. In some examples, the endpoint may reset the token bucket to reduce memory usage, e.g., the memory required to maintain the token bucket.

In some implementations, a data storage system may use another resource unit per second to determine whether or not to serve a request. For instance, a data storage system may use requests per second to probabilistically determine whether to serve a request for a particular entity. In this example, each endpoint determines a number of requests received from each entity, e.g., during a particular time period or that have not been served, and sends an assignment request to a global throttler indicating the number of requests. In this implementation, an assignment concerns a value that specifies requests per second and a value for a token bucket is measured in a quantity of requests. The global throttler determines, for a particular entity, the number of requests and assignments for each of the endpoints that received requests for the particular entity. The endpoints with requests for the particular entity, received during the particular time period or that have not been served, receive assignments from the global throttler and use Equation (1) to probabilistically determine whether to serve a particular request for the particular endpoint using Asgn as the assignment received from the global throttler and Debt as the amount of debt that would be created if the request is admitted, e.g., in a quantity of requests.

For example, an endpoint may receive two requests for a particular entity, e.g., receive both requests during the same time period or a first request during a first time period that is not served and a second request during a second time period subsequent to the first time period. The endpoint sends an assignment request to a global throttler indicating that the endpoint has two requests.

The global throttler determines the maximum number of requests for the particular entity, e.g., one request per second, and the total number of requests received for the particular entity, e.g., twenty, when eighteen of the requests are received from other endpoints. The global throttler determines assignments for each of the endpoints. For instance, the global throttler may determine an assignment of 1/20 = 0.05 requests per second (QPS) for every request and that the assignment for the endpoint should be 0.1 request per second since the endpoint received two requests. The global throttler determines other assignments for the other endpoints that received requests for the particular entity.

The endpoint receives the assignment of 0.1 request per second from the global throttler and probabilistically determines, for each of the two requests, whether to admit the request. Since each of the requests has a size of one, e.g., is one request, the total amount of debt that would be created if the request is served is initially the same for both requests, until one of the requests is served. For instance, if the endpoint's token bucket for the particular entity is at zero, then the value of Debt for both of the requests would be one.

In this example, the endpoint may determine AdmProb - the admission probability that each of the requests is served - for the first request and then use AdmProb to probabilistically determine whether to serve the first request. If the endpoint determines that the first request should be served, the endpoint admits the request and updates the token bucket for the particular entity. The endpoint may then determine an updated value of Debt for the second request. The endpoint may determine whether the updated value of Debt exceeds a debt limit and, if so, determine that the second request will not be admitted. If the updated value of Debt does not exceed the debt limit, the endpoint may determine an updated value for AdmProb and probabilistically determine whether to serve the second request.

When the endpoint probabilistically determines that the first request should not be served, the endpoint may use the value for AdmProb determined for the first requests when probabilistically determining whether to serve the second request. For example, the total amount of debt that would be created by serving the second request is the same as the total amount of debt that would be created by serving the first request and the assignment for the particular entity is the same.

Additional Implementation Details

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory program carrier for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example a programmable processor, a computer, or multiple processors or computers. The apparatus can also be or further include special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Computers suitable for the execution of a computer program include, by way of example, general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the user device, which acts as a client. Data generated at the user device, e.g., a result of the user interaction, can be received from the user device at the server.

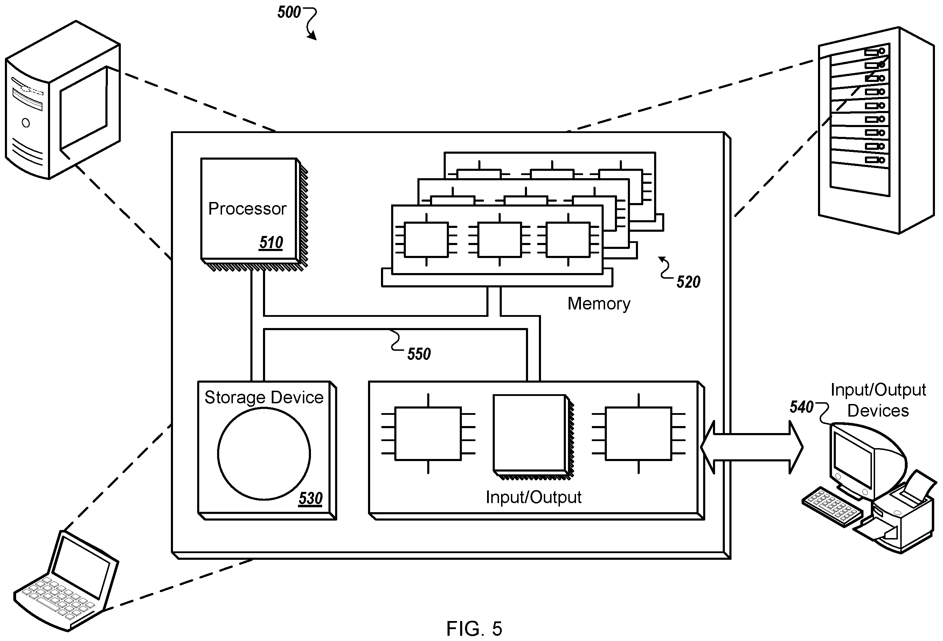

An example of one such type of computer is shown in FIG. 5, which shows a schematic diagram of a generic computer system 500. The system 500 can be used for the operations described in association with any of the computer-implemented methods described previously, according to one implementation. The system 500 includes a processor 510, a memory 520, a storage device 530, and an input/output device 540. Each of the components 510, 520, 530, and 540 are interconnected using a system bus 550. The processor 510 is capable of processing instructions for execution within the system 500. In one implementation, the processor 510 is a single-threaded processor. In another implementation, the processor 510 is a multi-threaded processor. The processor 510 is capable of processing instructions stored in the memory 520 or on the storage device 530 to display graphical information for a user interface on the input/output device 540.

The memory 520 stores information within the system 500. In one implementation, the memory 520 is a computer-readable medium. In one implementation, the memory 520 is a volatile memory unit. In another implementation, the memory 520 is a non-volatile memory unit.

The storage device 530 is capable of providing mass storage for the system 500. In one implementation, the storage device 530 is a computer-readable medium. In various different implementations, the storage device 530 may be a floppy disk device, a hard disk device, an optical disk device, or a tape device.

The input/output device 540 provides input/output operations for the system 500. In one implementation, the input/output device 540 includes a keyboard and/or pointing device. In another implementation, the input/output device 540 includes a display unit for displaying graphical user interfaces.

While this specification contains many specific implementation details, these should not be construed as limitations on the scope of what may be claimed, but rather as descriptions of features that may be specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

Further implementations are summarized in the following examples:

Example 1: A system comprising: a data processing apparatus; and a non-transitory computer readable storage medium in data communication with the data processing apparatus and storing instructions executable by the data processing apparatus and upon such execution cause the data processing apparatus to perform operations comprising: for each of multiple requests to process data: receiving, from a client device for a particular entity, the request to process data; and determining a size for serving the request; for each request in a set of the multiple requests to process data, the set including at least two or more requests to process data, each request in the set of multiple requests corresponding to an entity in a set of entities that includes two or more entities: providing, to a throttler system, an assignment request indicating the particular entity and the size for serving the request; receiving, from the throttler system, an assignment for the particular entity to use when serving the request; and probabilistically determining whether to currently serve the request based on the assignment, the size for serving the request, and an accrued quantity of tokens for the particular entity on the data processing apparatus; for a first subset of requests from set, in response to probabilistically determining to currently serve the request: serving the request; and for a second subset of requests from set, in response to probabilistically determining not to currently serve the request: determining whether a predetermined period of time has passed; in response to determining that the predetermined period of time has passed, sending a message to the client device indicating that the request will not be served; or in response to determining that the predetermined period of time has not passed: incrementing the accrued quantity of tokens by a quantity of the assignment; and re-determining the probabilistically determination whether to currently serve the request.

Example 2: The system of example 1, wherein probabilistically determining whether to currently serve the request comprises probabilistically determining whether to currently serve the request based on the assignment, the size for serving the request, the accrued quantity of tokens for the particular entity on the data processing apparatus, a maximum admission latency for the data processing apparatus, and an average throttler latency.

Example 3: The system of example 1 or 2, wherein probabilistically determining whether to currently serve the request comprises: determining a probability of serving the request using the assignment, the size for serving the request, and the accrued quantity of tokens for the particular entity on the data processing apparatus; generating a random number; comparing the random number with the probability to determine whether the random number is greater than the probability; and in response to determining that the random number is not greater than the probability, determining to currently serve the request; or in response to determining that the random number is greater than the probability, determining not to currently serve the request.

Example 4: The system of one of examples 1 to 3, the operations comprising: for each request in a second set of the multiple requests to process data that is different than the of the multiple requests, the second set including at least one or more requests to process data: determining whether the accrued quantity of tokens for the particular entity on the data processing apparatus is less than the size for serving the request; and in response to determining that the accrued quantity of tokens for the particular entity on the data processing apparatus is not less than the size for serving the request, serving the request, wherein providing, to the throttler system, the assignment request indicating the particular entity and the size for serving the request occurs in response to determining that the accrued quantity of tokens for the particular entity on the data processing apparatus is less than the size for serving the request.

Example 5: The system of example 4, wherein re-determining the probabilistically determination whether to currently serve the request comprises: determining whether the accrued quantity of tokens for the particular entity on the data processing apparatus is less than the size for serving the request; in response to determining that the accrued quantity of tokens for the particular entity on the data processing apparatus is not less than the size for serving the request, serving the request; or in response to determining that the accrued quantity of tokens for the particular entity on the data processing apparatus is less than the size for serving the request, performing the probabilistic determination whether to currently serve the request.

Example 6: The system of one of examples 1 to 5, the operations comprising: determining whether the accrued quantity of tokens is a negative value; providing, to the throttler system, an updated assignment request indicating the particular entity and the accrued quantity of tokens; receiving, from the throttler system, an updated assignment; and incrementing the accrued quantity of tokens by a quantity of the updated assignment.

Example 7: The system of one of examples 1 to 6, wherein serving the request comprises deducting the size for serving the request from the accrued quantity of tokens.

Example 8: The system of one of examples 1 to 7, wherein serving the request comprises: determining a debt value that indicates a difference between the accrued quantity of tokens and the size for serving the request; determining whether the debt value exceeds a debt limit; and serving the request in response to determining that the debt value does not exceed the debt limit.

Example 9: The system of one of examples 1 to 8, wherein the data processing apparatus comprises part of an endpoint in a cloud computing system.

Example 10: The system of one of examples 1 to 9, comprising the throttler system.

Example 11: The system of one of examples 1 to 10, wherein: the data processing apparatus comprises a device in a group of multiple devices that each send assignment requests to the throttler system; and receiving, from the throttler system, the assignment for the particular entity to use when serving the request comprises receiving an assignment determined using the assignment requests received by the throttler system for the particular entity from each device in the group of multiple devices.

Example 12: The system of examples 11, wherein a sum of each of the assignment requests for the particular entity sent to each of the devices in the group of multiple devices equals a budget for the particular entity.

Example 13: The system of one of examples 1 to 12, the operations comprising: receiving an updated assignment, wherein re-determining the probabilistically determination whether to currently serve the request comprises probabilistically determining whether to currently serve the request using the updated assignment, the size for serving the request, and the accrued quantity of tokens for the particular entity on the data processing apparatus.

Example 14: The system of one of examples 1 to 13, wherein receiving the request to process data for the particular entity comprises receiving one of a read request or a write request.

Example 15: The system of one of examples 1 to 14, wherein receiving the request to process data for the particular entity comprises receiving a request for a particular user.

Example 16: The system of one of examples 1 to 15, wherein receiving the request to process data for the particular entity comprises receiving a request for a particular company.

Example 17: The system of one of examples 1 to 16, wherein serving the request comprises: determining a response to the request; and providing the response to the client device.

Example 18: The system of one of examples 1 to 17, wherein re-determining the probabilistically determination whether to currently serve the request comprises re-determining the probabilistically determination whether to currently serve the request until the predetermined period of time has passed.

Example 19: The system of one of examples 1 to 18, wherein the set of the multiple requests comprises each of the requests in the multiple requests.

Example 20: The system of one of examples 1 to 19, wherein: determining the size for serving the request comprises determining a size of data to be processed when serving the request; providing, to the throttler system, the assignment request indicating the particular entity and the size for serving the request comprises providing, to the throttler system, a bandwidth assignment request indicating the particular entity and the size of data to be processed when serving the request; receiving, from the throttler system, the assignment for the particular entity to use when serving the request comprises receiving, from the throttler system, a bandwidth assignment for the particular entity to use when serving the request; and probabilistically determining whether to currently serve the request based on the assignment, the size for serving the request, and the accrued quantity of tokens for the particular entity on the data processing apparatus comprises probabilistically determining whether to currently serve the request based on the bandwidth assignment, the size of the data to be processed, and the accrued quantity of tokens for the particular entity on the data processing apparatus.

Example 21: The system of one of examples 1 to 20, wherein: determining the size for serving the request comprises determining a quantity of requests to be processed by an endpoint that includes the data processing apparatus for the particular entity; providing, to the throttler system, the assignment request indicating the particular entity and the size for serving the request comprises providing, to the throttler system, an assignment request indicating the particular entity and the quantity of requests to be processed by the endpoint for the particular entity; and probabilistically determining whether to currently serve the request based on the assignment, the size for serving the request, and the accrued quantity of tokens for the particular entity on the data processing apparatus comprises probabilistically determining whether to currently serve the request based on the assignment, a value of one for the request to be served, and the accrued quantity of tokens for the particular entity on the data processing apparatus.

Example 22: A non-transitory computer readable storage medium storing instructions executable by a data processing apparatus and upon such execution cause the data processing apparatus to perform operations comprising: for each of multiple requests to process data: receiving, from a client device for a particular entity, the request to process data; and determining a size of data to be processed when serving the request; for each request in a set of the multiple requests to process data, the set including at least two or more requests to process data, each request in the set of multiple requests corresponding to an entity in a set of entities that includes two or more entities: providing, to a throttler system, a bandwidth assignment request indicating the particular entity and the size of data to be processed when serving the request; receiving, from the throttler system, a bandwidth assignment for the particular entity to use when serving the request; and probabilistically determining whether to currently serve the request based on the bandwidth assignment, the size of the data to be processed, and an accrued quantity of tokens for the particular entity on the data processing apparatus; for a first subset of requests from set, in response to probabilistically determining to currently serve the request: serving the request; and for a second subset of requests from set, in response to probabilistically determining not to currently serve the request: determining whether a predetermined period of time has passed; in response to determining that the predetermined period of time has passed, sending a message to the client device indicating that the request will not be served; or in response to determining that the predetermined period of time has not passed: incrementing the accrued quantity of tokens by a quantity of the bandwidth assignment; and re-determining the probabilistically determination whether to currently serve the request.

Example 23: A computer-implemented method comprising: for each of multiple requests to process data: receiving, by an endpoint from a client device for a particular entity, the request to process data; and determining a quantity of requests to be processed by the endpoint for the particular entity; for each request in a set of the multiple requests to process data, the set including at least two or more requests to process data, each request in the set of multiple requests corresponding to an entity in a set of entities that includes two or more entities: providing, to a throttler system, an assignment request indicating the particular entity and the quantity of requests to be processed by the endpoint for the particular entity; receiving, from the throttler system, an assignment for the particular entity to use when serving the request; and probabilistically determining whether to currently serve the request based on the assignment, a value of one for the request to be served, and an accrued quantity of tokens for the particular entity on the data processing apparatus; for a first subset of requests from set, in response to probabilistically determining to currently serve the request: serving the request; and for a second subset of requests from set, in response to probabilistically determining not to currently serve the request: determining whether a predetermined period of time has passed; in response to determining that the predetermined period of time has passed, sending a message to the client device indicating that the request will not be served; or in response to determining that the predetermined period of time has not passed: incrementing the accrued quantity of tokens by a quantity of the assignment; and re-determining the probabilistically determination whether to currently serve the request.

**Claims**

1. A system comprising:

    a data processing apparatus; and
    a non-transitory computer readable storage medium in data communication with the data processing apparatus and storing instructions executable by the data processing apparatus and upon such execution cause the data processing apparatus to perform operations comprising:

       for each of multiple requests to process data:

          receiving, from a client device (104) for a particular entity, the request to process data; and
          determining a size for serving the request;

       for each request in a set of the multiple requests to process data, the set including at least two or more requests to process data, each request in the set of multiple requests corresponding to an entity in a set of entities that includes two or more entities:

          providing, to a throttler system (108), an assignment request indicating the particular entity and the size for serving the request;
          receiving, from the throttler system (108), an assignment for the particular entity to use when serving the request; and
          probabilistically determining whether to currently serve the request based on the assignment, the size for serving the request, and an accrued quantity of tokens for the particular entity on the data processing apparatus;

       wherein the probabilistically determining causes, for each request of a first subset of requests from set, in response to probabilistically determining to currently serve the request:
       serving the request, wherein the size for serving the request is deducted from the accrued quantity of tokens; and

       wherein the probabilistically determining causes, for each request of a second subset of requests from set, in response to probabilistically determining not to currently serve the request:

          determining whether a predetermined period of time has passed;
          in response to determining that the predetermined period of time has passed, sending a message to the client device (104) indicating that the request will not be served; or

in response to determining that the predetermined period of time has not passed:

> incrementing the accrued quantity of tokens by a quantity of the assignment; and
> re-determining the probabilistically determination whether to currently serve the request.

**2.** The system of claim 1, wherein probabilistically determining whether to currently serve the request comprises probabilistically determining whether to currently serve the request based on the assignment, the size for serving the request, the accrued quantity of tokens for the particular entity on the data processing apparatus, a maximum admission latency for the data processing apparatus, and an average throttler latency.

**3.** The system of claim 1, wherein probabilistically determining whether to currently serve the request comprises:

> determining a probability of serving the request using the assignment, the size for serving the request, and the accrued quantity of tokens for the particular entity on the data processing apparatus;
> generating a random number;
> comparing the random number with the probability to determine whether the random number is greater than the probability; and
> in response to determining that the random number is not greater than the probability, determining to currently serve the request; or
> in response to determining that the random number is greater than the probability, determining not to currently serve the request.

**4.** The system of claim 1, the operations comprising:
for each request in a second set of the multiple requests to process data that is different than the of the multiple requests, the second set including at least one or more requests to process data:

> determining whether the accrued quantity of tokens for the particular entity on the data processing apparatus is less than the size for serving the request; and
> in response to determining that the accrued quantity of tokens for the particular entity on the data processing apparatus is not less than the size for serving the request, serving the request, wherein providing, to the throttler system (108), the assignment request indicating the particular entity and the size for serving the request occurs in response to determining that the accrued quantity of tokens for the particular entity on the data processing apparatus is less than the size for serving the request.

**5.** The system of claim 4, wherein re-determining the probabilistically determination whether to currently serve the request comprises:

> determining whether the accrued quantity of tokens for the particular entity on the data processing apparatus is less than the size for serving the request;
> in response to determining that the accrued quantity of tokens for the particular entity on the data processing apparatus is not less than the size for serving the request, serving the request; or
> in response to determining that the accrued quantity of tokens for the particular entity on the data processing apparatus is less than the size for serving the request, performing the probabilistic determination whether to currently serve the request.

**6.** The system of claim 1, the operations further comprising:

> determining whether the accrued quantity of tokens is a negative value;
> providing, to the throttler system (108), an updated assignment request indicating the particular entity, the size for serving the request, and the accrued quantity of tokens;
> receiving, from the throttler system (108), an updated assignment; and
> incrementing the accrued quantity of tokens by a quantity of the updated assignment.

**7.** The system of claim 1, wherein serving the request comprises:

> determining a debt value that indicates a difference between the accrued quantity of tokens and the size for serving the request;
> determining whether the debt value exceeds a debt limit; and

serving the request in response to determining that the debt value does not exceed the debt limit.

8. The system of claim 1, wherein the data processing apparatus comprises part of an endpoint (106) in a cloud computing system.

9. The system of claim 1, comprising the throttler system (108).

10. The system of claim 1, wherein:

the data processing apparatus comprises a device in a group of multiple devices that each send assignment requests to the throttler system (108); and
receiving, from the throttler system (108), the assignment for the particular entity to use when serving the request comprises receiving an assignment determined using the assignment requests received by the throttler system (108) for the particular entity from each device in the group of multiple devices.

11. The system of claim 10, wherein a sum of each of the assignment requests for the particular entity sent to each of the devices in the group of multiple devices equals a budget for the particular entity.

12. The system of claim 1, the operations comprising:
receiving an updated assignment, wherein re-determining the probabilistically determination whether to currently serve the request comprises probabilistically determining whether to currently serve the request using the updated assignment, the size for serving the request, and the accrued quantity of tokens for the particular entity on the data processing apparatus.

13. The system of claim 1, wherein receiving the request to process data for the particular entity comprises receiving one of a read request or a write request; or wherein receiving the request to process data for the particular entity comprises receiving a request for a particular user; or wherein receiving the request to process data for the particular entity comprises receiving a request for a particular company.

14. The system of claim 1, wherein serving the request comprises:

determining a response to the request; and
providing the response to the client device (104).

15. The system of claim 1, wherein re-determining the probabilistically determination whether to currently serve the request comprises re-determining the probabilistically determination whether to currently serve the request until the predetermined period of time has passed.

16. The system of claim 1, wherein:

determining the size for serving the request comprises determining a size of data to be processed when serving the request;
providing, to the throttler system (108), the assignment request indicating the particular entity and the size for serving the request comprises providing, to the throttler system (108), a bandwidth assignment request indicating the particular entity and the size of data to be processed when serving the request;
receiving, from the throttler system (108), the assignment for the particular entity to use when serving the request comprises receiving, from the throttler system (108), a bandwidth assignment for the particular entity to use when serving the request; and
probabilistically determining whether to currently serve the request based on the assignment, the size for serving the request, and the accrued quantity of tokens for the particular entity on the data processing apparatus comprises probabilistically determining whether to currently serve the request based on the bandwidth assignment, the size of the data to be processed, and the accrued quantity of tokens for the particular entity on the data processing apparatus.

17. The system of claim 1, wherein:

determining the size for serving the request comprises determining a quantity of requests to be processed by an endpoint (106) that includes the data processing apparatus for the particular entity;

providing, to the throttler system (108), the assignment request indicating the particular entity and the size for serving the request comprises providing, to the throttler system (108), an assignment request indicating the particular entity and the quantity of requests to be processed by the endpoint (106) for the particular entity; and probabilistically determining whether to currently serve the request based on the assignment, the size for serving the request, and the accrued quantity of tokens for the particular entity on the data processing apparatus comprises probabilistically determining whether to currently serve the request based on the assignment, a value of one for the request to be served, and the accrued quantity of tokens for the particular entity on the data processing apparatus.

18. A non-transitory computer readable storage medium storing instructions executable by a data processing apparatus and upon such execution cause the data processing apparatus to perform operations comprising:

for each of multiple requests to process data:

receiving, from a client device (104) for a particular entity, the request to process data; and determining a size for serving the request; for each request in a set of the multiple requests to process data, the set including at least two or more requests to process data, each request in the set of multiple requests corresponding to an entity in a set of entities that includes two or more entities:

providing, to a throttler system (108), an assignment request indicating the particular entity and the size for serving the request;
receiving, from the throttler system (108), an assignment for the particular entity to use when serving the request; and
probabilistically determining whether to currently serve the request based on the assignment, the size for serving the request, and an accrued quantity of tokens for the particular entity on the data processing apparatus;

wherein the probabilistically determining causes, for each request of a first subset of requests from set, in response to probabilistically determining to currently serve the request:
serving the request, wherein the size for serving the request is deducted from the accrued quantity of tokens; and
wherein the probabilistically determining causes, for each request of a second subset of requests from set, in response to probabilistically determining not to currently serve the request:

determining whether a predetermined period of time has passed;
in response to determining that the predetermined period of time has passed, sending a message to the client device indicating that the request will not be served; or
in response to determining that the predetermined period of time has not passed:

incrementing the accrued quantity of tokens by a quantity of the assignment; and
re-determining the probabilistically determination whether to currently serve the request.

19. A computer-implemented method comprising:

for each of multiple requests to process data:

receiving (202), from a client device for a particular entity, the request to process data; and determining (204) a size for serving the request;

for each request in a set of the multiple requests to process data, the set including at least two or more requests to process data, each request in the set of multiple requests corresponding to an entity in a set of entities that includes two or more entities:

providing (206), to a throttler system, an assignment request indicating the particular entity and the size for serving the request;
receiving (208), from the throttler system, an assignment for the particular entity to use when serving the request; and
probabilistically determining (210) whether to currently serve the request based on the assignment, size for serving the request, and an accrued quantity of tokens for the particular entity on the data processing apparatus;

wherein the probabilistically determining causes, for each request of a first subset of requests from set, in response to probabilistically determining to currently serve the request:

serving (214) the request, wherein the size for serving the request is deducted from the accrued quantity of tokens; and

wherein the probabilistically determining causes, for each request of a second subset of requests from set, in response to probabilistically determining not to currently serve the request:

determining (216) whether a predetermined period of time has passed;
in response to determining that the predetermined period of time has passed,
sending (218) a message to the client device indicating that the request will not be served; or
in response to determining that the predetermined period of time has not passed:

incrementing (220) the accrued quantity of tokens by a quantity of the assignment; and
re-determining the probabilistically determination whether to currently serve the request.

## Patentansprüche

1. System, umfassend:

ein Datenverarbeitungsgerät; und
ein nicht flüchtiges computerlesbares Speichermedium in Datenkommunikation mit dem Datenverarbeitungsgerät, das Instruktionen speichert, die durch das Datenverarbeitungsgerät ausführbar sind, und bei einer solchen Ausführung das Datenverarbeitungsgerät dazu veranlassen, Operationen durchzuführen, die Folgendes umfassen:
für jede von mehreren Anfragen zum Verarbeiten von Daten:

Empfangen der Anfrage zum Verarbeiten von Daten von einer Clientvorrichtung (104) für eine spezielle Einheit; und
Bestimmen einer Größe zum Erfüllen der Anfrage;

für jede Anfrage in einem Satz der mehreren Anfragen zum Verarbeiten von Daten, wobei der Satz wenigstens zwei oder mehr Anfragen zum Verarbeiten von Daten enthält, wobei jede Anfrage in dem Satz von mehreren Anfragen einer Einheit in einem Satz von Einheiten entspricht, der zwei oder mehr Einheiten enthält:

Bereitstellen, an ein Drosslersystem (108), einer Zuweisungsanfrage, die die spezielle Einheit und die Größe zum Erfüllen der Anfrage angibt;
Empfangen, von dem Drosslersystem (108), einer Zuweisung für die spezielle Einheit zur Verwendung, wenn die Anfrage erfüllt wird; und
probabilistisches Bestimmen, ob die Anfrage momentan erfüllt werden soll, basierend auf der Zuweisung, der Größe zum Erfüllen der Anfrage, und einer angesammelten Quantität von Tokens für die spezielle Einheit auf dem Datenverarbeitung sgerät;

wobei die probabilistische Bestimmung für jede Anfrage eines ersten Untersatzes von Anfragen von dem Satz in Antwort auf die probabilistische Bestimmung zum momentanen Erfüllen der Anfrage Folgendes verursacht:

Erfüllen der Anfrage, wobei die Größe zum Erfüllen der Anfrage von der angesammelten Quantität von Tokens abgeleitet ist; und
wobei die probabilistische Bestimmung für jede Anfrage eines zweiten Untersatzes von Anfragen von dem Satz in Antwort auf die probabilistische Bestimmung, die Anfrage momentan nicht zu erfüllen, Folgendes veranlasst:

Bestimmen, ob eine vorbestimmte Zeitperiode abgelaufen ist;
in Antwort auf eine Bestimmung, dass die vorbestimmte Zeitperiode abgelaufen ist, Senden einer Nachricht an die Clientvorrichtung (104), die angibt, dass die Anfrage nicht erfüllt werden wird; oder
in Antwort auf eine Bestimmung, dass die vorbestimmte Zeitperiode nicht abgelaufen ist:

Inkrementieren der angesammelten Quantität von Tokens um eine Quantität der Zuweisung; und erneutes Bestimmen der probabilistischen Bestimmung, ob die Anfrage momentan erfüllt werden soll.

2. System nach Anspruch 1, wobei die probabilistische Bestimmung, ob die Anfrage momentan erfüllt werden soll, eine probabilistische Bestimmung umfasst, ob die Anfrage momentan erfüllt werden soll, basierend auf der Zuweisung, der Größe zum Erfüllen der Anfrage, der angesammelten Quantität von Tokens für die spezielle Einheit auf dem Datenverarbeitungsgerät, einer maximalen Zulassungslatenz für das Datenverarbeitungsgerät, und einer durchschnittlichen Drosslerlatenz.

3. System nach Anspruch 1, wobei die probabilistische Bestimmung, ob die Anfrage momentan erfüllt werden soll, Folgendes umfasst:

Bestimmen einer Wahrscheinlichkeit des Erfüllens der Anfrage unter Verwendung der Zuweisung, der Größe zum Erfüllen der Anfrage, und der angesammelten Quantität von Tokens für die spezielle Einheit auf dem Datenverarbeitung sgerät;
Generieren einer Zufallszahl;
Vergleichen der Zufallszahl mit der Wahrscheinlichkeit, um zu bestimmen, ob die Zufallszahl größer als die Wahrscheinlichkeit ist; und
in Antwort auf eine Bestimmung, dass die Zufallszahl nicht größer als die Wahrscheinlichkeit ist, Bestimmen, dass die Anfrage momentan erfüllt werden soll; oder
in Antwort auf eine Bestimmung, dass die Zufallszahl größer als die Wahrscheinlichkeit ist, Bestimmen, dass die Anfrage momentan nicht erfüllt werden soll.

4. System nach Anspruch 1, wobei die Operationen Folgendes umfassen:
für jede Anfrage in einem zweiten Satz der mehreren Anfragen zum Verarbeiten von Daten, der verschieden ist von den mehreren Anfragen, wobei der zweite Satz wenigstens eine oder mehr Anfragen zum Verarbeiten von Daten enthält:

Bestimmen, ob die angesammelte Quantität von Tokens für die spezielle Einheit auf dem Datenverarbeitungsgerät kleiner ist als die Größe zum Erfüllen der Anfrage; und
in Antwort auf eine Bestimmung, dass die angesammelte Quantität von Tokens für die spezielle Einheit auf dem Datenverarbeitungsgerät nicht kleiner ist als die Größe zum Erfüllen der Anfrage, Erfüllen der Anfrage, wobei das Bereitstellen, an das Drosslersystem (108), der Zuweisungsanfrage, die die spezielle Einheit und die Größe zum Erfüllen der Anfrage angibt, in Antwort auf eine Bestimmung erfolgt, dass die angesammelte Quantität von Tokens für die spezielle Einheit auf dem Datenverarbeitungsgerät kleiner ist als die Größe zum Erfüllen der Anfrage.

5. System nach Anspruch 4, wobei die erneute Bestimmung der probabilistischen Bestimmung, ob die Anfrage momentan erfüllt werden soll, Folgendes umfasst:

Bestimmen, ob die angesammelte Quantität von Tokens für die spezielle Einheit auf dem Datenverarbeitungsgerät kleiner ist als die Größe zum Erfüllen der Anfrage;
in Antwort auf eine Bestimmung, dass die angesammelte Quantität von Tokens für die spezielle Einheit auf dem Datenverarbeitungsgerät nicht kleiner ist als die Größe zum Erfüllen der Anfrage, Erfüllen der Anfrage; oder
in Antwort auf eine Bestimmung, dass die angesammelte Quantität von Tokens für die spezielle Einheit auf dem Datenverarbeitungsgerät kleiner ist als die Größe zum Erfüllen der Anfrage, Durchführen der probabilistischen Bestimmung, ob die Anfrage momentan erfüllt werden soll.

6. System nach Anspruch 1, wobei die Operationen ferner Folgendes umfassen:

Bestimmen, ob die angesammelte Quantität von Tokens ein negativer Wert ist;
Bereitstellen, an das Drosslersystem (108), einer aktualisierten Zuweisungsanfrage, die die spezielle Einheit, die Göße zum Erfüllen der Anfrage und die angesammelte Quantität von Tokens angibt;
Empfangen, von dem Drosslersystem (108), einer aktualisierten Zuweisung; und
Inkrementieren der angesammelten Quantität von Tokens um eine Quantität der aktualisierten Zuweisung.

7. System nach Anspruch 1, wobei das Erfüllen der Anfrage Folgendes umfasst:

Bestimmen eines Schuldwerts, der eine Differenz angibt zwischen der angesammelten Quantität von Tokens und der Größe zum Erfüllen der Anfrage;

Bestimmen, ob der Schuldwert eine Schuldengrenze überschreitet; und

Erfüllen der Anfrage in Antwort auf eine Bestimmung, dass der Schuldwert die Schuldengrenze nicht überschreitet.

8. System nach Anspruch 1, wobei das Datenverarbeitungsgerät einen Teil eines Endpunkts (106) in einem Cloudcomputingsystem umfasst.

9. System nach Anspruch 1, umfassend das Drosslersystem (108).

10. System nach Anspruch 1, wobei:

das Datenverarbeitungsgerät eine Vorrichtung in einer Gruppe von mehreren Vorrichtungen umfasst, die jeweils Zuweisungsanfragen an das Drosslersystem (108) senden; und

wobei das Empfangen, von dem Drosslersystem (108), der Zuweisung für die spezielle Einheit zur Verwendung, wenn die Anfrage erfüllt wird, ein Empfangen einer Zuweisung umfasst, die bestimmt ist unter Verwendung der Zuweisungsanfragen, die durch das Drosslersystem (108) für die spezielle Einheit von jeder Vorrichtung in der Gruppe von mehreren Vorrichtungen empfangen werden.

11. System nach Anspruch 10, wobei eine Summe von jeder der Zuweisungsanfragen für die spezielle Einheit, die an jede der Vorrichtungen in der Gruppe von mehreren Vorrichtung gesendet werden, gleich einem Budget für die spezielle Einheit ist.

12. System nach Anspruch 1, wobei die Operationen Folgendes umfassen:

Empfangen einer aktualisierten Zuweisung, wobei das erneute Bestimmen der probabilistischen Bestimmung, ob die Anfrage momentan erfüllt werden soll, eine probabilistische Bestimmung umfasst, ob die Anfrage momentan erfüllt werden soll, unter Verwendung der aktualisierten Zuweisung, der Größe zum Erfüllen der Anfrage, und der angesammelten Quantität von Tokens für die spezielle Einheit auf dem Datenverarbeitungsgerät.

13. System nach Anspruch 1, wobei das Empfangen der Anfrage zum Verarbeiten von Daten für die spezielle Einheit ein Empfangen von einer von einer Leseanfrage oder einer Schreibanfrage umfasst; oder wobei das Empfangen der Anfrage zum Verarbeiten von Daten für die spezielle Einheit ein Empfangen einer Anfrage für einen speziellen Benutzer umfasst; oder wobei das Empfangen der Anfrage zum Verarbeiten von Daten für die spezielle Einheit ein Empfangen einer Anfrage für ein spezielles Unternehmen umfasst.

14. System nach Anspruch 1, wobei das Erfüllen der Anfrage Folgendes umfasst:

Bestimmen einer Antwort auf die Anfrage; und

Bereitstellen der Antwort an die Clientvorrichtung (104).

15. System nach Anspruch 1, wobei das erneute Bestimmen der probabilistischen Bestimmung, ob die Anfrage momentan erfüllt werden soll, ein erneutes Bestimmen der probabilistischen Bestimmung umfasst, ob die Anfrage momentan erfüllt werden soll, bis die vorbestimmte Zeitperiode abgelaufen ist.

16. System nach Anspruch 1, wobei:

das Bestimmen der Größe zum Erfüllen der Anfrage ein Bestimmen einer Größe von Daten umfasst, die zu verarbeiten sind, wenn die Anfrage erfüllt wird;

das Bereitstellen, an das Drosslersystem (108), der Zuweisungsanfrage, die die spezielle Einheit und die Größe zum Erfüllen der Anfrage angibt, ein Bereitstellen, an das Drosslersystem (108), einer Bandbreitenzuweisungsanfrage umfasst, die die spezielle Einheit und die Größe von Daten angibt, die zu verarbeiten sind, wenn die Anfrage erfüllt wird;

das Empfangen, von dem Drosslersystem (108), der Zuweisung für die spezielle Einheit zur Verwendung, wenn die Anfrage erfüllt wird, ein Empfangen, von dem Drosslersystem (108), einer Bandbreitenzuweisung für die spezielle Einheit zur Verwendung umfasst, wenn die Anfrage erfüllt wird; und

die probabilistische Bestimmung, ob die Anfrage momentan erfüllt werden soll, basierend auf der Zuweisung, der Größe zum Erfüllen der Anfrage, und der angesammelten Quantität von Tokens für die spezielle Einheit auf dem Datenverarbeitungsgerät eine probabilistische Bestimmung umfasst, ob die Anfrage momentan erfüllt werden soll, basierend auf der Bandbreitenzuweisung, der Größe der zu verarbeitenden Daten, und der angesammelten Quantität von Tokens für die spezielle Einheit auf dem Datenverarbeitungsgerät.

**17.** System nach Anspruch 1, wobei:

die Bestimmung der Größe zum Erfüllen der Anfrage eine Bestimmung einer Quantität von Anfragen umfasst, die durch einen Endpunkt (106) zu verarbeiten sind, der das Datenverarbeitungsgerät für die spezielle Einheit enthält;
das Bereitstellen, an das Drosslersystem (108), der Zuweisunganfrage, die die spezielle Einheit und die Größe zum Erfüllen der Anfrage angibt, ein Bereitstellen, an das Drosslersystem (108), einer Zuweisunganfrage umfasst, die die spezielle Einheit und die Quantität von Anfragen angibt, die durch den Endpunkt (106) für die spezielle Einheit zu verarbeiten sind; und
die probabilistische Bestimmung, ob die Anfrage momentan erfüllt werden soll, basierend auf der Zuweisung, der Größe zum Erfüllen der Anfrage und der angesammelten Quantität von Tokens für die spezielle Einheit auf dem Datenverarbeitungsgerät eine probabilistische Bestimmung umfasst, ob die Anfrage momentan erfüllt werden soll, basierend auf der Zuweisung, einem Wert von Eins für die zu erfüllende Anfrage, und der angesammelten Quantität von Tokens für die spezielle Einheit auf dem Datenverarbeitungsgerät.

**18.** Nicht flüchtiges computerlesbares Speichermedium, das Instruktionen speichert, die durch ein Datenverarbeitungsgerät ausführbar sind, und die bei einer solchen Ausführung das Datenverarbeitungsgerät dazu veranlassen, Operationen durchzuführen, die Folgendes umfassen:

für jede von mehreren Anfragen zum Verarbeiten von Daten:

Empfangen der Anfrage zum Verarbeiten von Daten von einer Clientvorrichtung (104) für eine spezielle Einheit; und
Bestimmen einer Größe zum Erfüllen der Anfrage;

für jede Anfrage in einem Satz der mehreren Anfragen zum Verarbeiten von Daten, wobei der Satz wenigstens zwei oder mehr Anfragen zum Verarbeiten von Daten enthält, wobei jede Anfrage in dem Satz von mehreren Anfragen einer Einheit in einem Satz von Einheiten entspricht, der zwei oder mehr Einheiten enthält:

Bereitstellen, an ein Drosslersystem (108), einer Zuweisungsanfrage, die die spezielle Einheit und die Größe zum Erfüllen der Anfrage angibt;
Empfangen, von dem Drosslersystem (108), einer Zuweisung für die spezielle Einheit zur Verwendung, wenn die Anfrage erfüllt wird; und
probabilistisches Bestimmen, ob die Anfrage momentan erfüllt werden soll, basierend auf der Zuweisung, der Größe zum Erfüllen der Anfrage, und einer angesammelten Quantität von Tokens für die spezielle Einheit auf dem Datenverarbeitung sgerät;

wobei die probabilistische Bestimmung für jede Anfrage eines ersten Untersatzes von Anfragen von dem Satz in Antwort auf die probabilistische Bestimmung zum momentanen Erfüllen der Anfrage Folgendes verursacht:

Erfüllen der Anfrage, wobei die Größe zum Erfüllen der Anfrage von der angesammelten Quantität von Tokens abgeleitet ist; und
wobei die probabilistische Bestimmung für jede Anfrage eines zweiten Untersatzes von Anfragen von dem Satz in Antwort auf die probabilistische Bestimmung, die Anfrage momentan nicht zu erfüllen, Folgendes veranlasst:

Bestimmen, ob eine vorbestimmte Zeitperiode abgelaufen ist;
in Antwort auf eine Bestimmung, dass die vorbestimmte Zeitperiode abgelaufen ist, Senden einer Nachricht an die Clientvorrichtung (104), die angibt, dass die Anfrage nicht erfüllt werden wird; oder
in Antwort auf eine Bestimmung, dass die vorbestimmte Zeitperiode nicht abgelaufen ist:

Inkrementieren der angesammelten Quantität von Tokens um eine Quantität der Zuweisung; und
erneutes Bestimmen der probabilistischen Bestimmung, ob die Anfrage momentan erfüllt werden soll.

**19.** Computerimplementiertes Verfahren, umfassend Folgendes:

für jede von mehreren Anfragen zum Verarbeiten von Daten:

Empfangen (202) der Anfrage zum Verarbeiten von Daten von einer Clientvorrichtung für eine spezielle Einheit; und
Bestimmen (204) einer Größe zum Erfüllen der Anfrage;

für jede Anfrage in einem Satz der mehreren Anfragen zum Verarbeiten von Daten, wobei der Satz wenigstens zwei oder mehr Anfragen zum Verarbeiten von Daten enthält, wobei jede Anfrage in dem Satz von mehreren Anfragen einer Einheit in einem Satz von Einheiten entspricht, der zwei oder mehr Einheiten enthält:

Bereitstellen (206), an ein Drosslersystem, einer Zuweisungsanfrage, die die spezielle Einheit und die Gräße zum Erfüllen der Anfrage angibt;
Empfangen (208), von dem Drosslersystem, einer Zuweisung für die spezielle Einheit zur Verwendung, wenn die Anfrage erfüllt wird; und
probabilistisches Bestimmen (210), ob die Anfrage momentan erfüllt werden soll, basierend auf der Zuweisung, der Größe zum Erfüllen der Anfrage, und einer angesammelten Quantität von Tokens für die spezielle Einheit auf dem Datenverarbeitung sgerät;

wobei die probabilistische Bestimmung für jede Anfrage eines ersten Untersatzes von Anfragen von dem Satz in Antwort auf die probabilistische Bestimmung zum momentanen Erfüllen der Anfrage Folgendes verursacht:

Erfüllen (214) der Anfrage, wobei die Größe zum Erfüllen der Anfrage von der angesammelten Quantität von Tokens abgeleitet ist; und
wobei die probabilistische Bestimmung für jede Anfrage eines zweiten Untersatzes von Anfragen von dem Satz in Antwort auf die probabilistische Bestimmung, die Anfrage momentan nicht zu erfüllen, Folgendes veranlasst:

Bestimmen (216), ob eine vorbestimmte Zeitperiode abgelaufen ist;
in Antwort auf eine Bestimmung, dass die vorbestimmte Zeitperiode abgelaufen ist, Senden (218) einer Nachricht an die Clientvorrichtung, die angibt, dass die Anfrage nicht erfüllt werden wird; oder
in Antwort auf eine Bestimmung, dass die vorbestimmte Zeitperiode nicht abgelaufen ist:

Inkrementieren (220) der angesammelten Quantität von Tokens um eine Quantität der Zuweisung; und
erneutes Bestimmen der probabilistischen Bestimmung, ob die Anfrage momentan erfüllt werden soll.

**Revendications**

**1.** Système comprenant :

un appareil de traitement de données ; et
un support de stockage lisible par ordinateur non transitoire en communication de données avec l'appareil de traitement de données et le stockage des instructions exécutables par l'appareil de traitement de données et à la suite d'une telle exécution font que l'appareil de traitement de données réalise des opérations comprenant :

pour chacune des multiples demandes pour traiter des données
la réception, d'un dispositif client (104) pour une entité particulière, de la demande pour traiter des données ; et
la détermination d'une taille pour fournir la demande ;

pour chaque demande dans un ensemble des multiples demandes pour traiter des données, l'ensemble incluant au moins deux ou plusieurs demandes pour traiter des données, chaque demande dans l'ensemble de multiples demandes correspondant à une entité dans un ensemble d'entités qui inclut deux ou plusieurs entités :

la fourniture, à un système d'étranglement (108), d'une demande d'attribution indiquant l'entité particulière et la taille pour fournir la demande ;

la réception, du système d'étranglement (108), d'une attribution pour l'entité particulière à utiliser lors de la fourniture de la demande ; et

la détermination de manière probabiliste s'il faut ou non fournir actuellement la demande sur base de l'attribution, la taille pour fournir la demande, et une plus grande quantité de jetons pour l'entité particulière sur l'appareil de traitement de données ;

dans lequel la détermination de manière probabiliste provoque, pour chaque demande d'un premier sous-ensemble de demandes issu de l'ensemble, en réponse à la détermination de manière probabiliste de fournir actuellement la demande la fourniture de la demande, dans lequel la taille pour fournir la demande est déduite de la plus grande quantité de jetons ; et

dans lequel la détermination de manière probabiliste provoque, pour chaque demande d'un deuxième sous-ensemble de demandes issu de l'ensemble, en réponse à la détermination de manière probabiliste de ne pas fournir actuellement la demande :

la détermination si une période de temps prédéterminé est passée ;

en réponse à la détermination que la période de temps prédéterminé est passée, l'envoi d'un message au dispositif client (104) indiquant que la demande ne sera pas donnée ; ou

en réponse à la détermination que la période de temps prédéterminé n'est pas passée :

l'incrémentation de la plus grande quantité de jetons par une quantité de l'attribution ; et

la redétermination de la détermination de manière probabiliste s'il faut ou non fournir actuellement la demande.

2. Système selon la revendication 1, dans lequel la détermination de manière probabiliste s'il faut ou non fournir actuellement la demande comprend la détermination de manière probabiliste s'il faut ou non fournir actuellement la demande sur base de l'attribution, la taille pour fournir la demande, la plus grande quantité de jetons pour l'entité particulière sur l'appareil de traitement de données, une latence d'admission maximale pour l'appareil de traitement de données, et une latence d'étranglement moyenne.

3. Système selon la revendication 1, dans lequel la détermination de manière probabiliste s'il faut ou non fournir actuellement la demande comprend :

la détermination d'une probabilité de fournir la demande en utilisant l'attribution, la taille pour fournir la demande, et la plus grande quantité de jetons pour l'entité particulière sur l'appareil de traitement de données ;

la génération d'un nombre aléatoire ;

la comparaison du nombre aléatoire avec la probabilité pour déterminer si le nombre aléatoire est supérieur à la probabilité ; et

en réponse à la détermination que le nombre aléatoire n'est pas supérieur à la probabilité, la détermination pour fournir actuellement la demande ; ou

en réponse à la détermination que le nombre aléatoire est supérieur à la probabilité, la détermination de ne pas fournir actuellement la demande.

4. Système selon la revendication 1, les opérations comprenant
pour chaque demande, dans un deuxième ensemble des multiples demandes pour traiter des données, qui est différente de l'une des multiples demandes, le deuxième ensemble incluant au moins une ou plusieurs demandes pour traiter des données

la détermination si la plus grande quantité de jetons pour l'entité particulière sur l'appareil de traitement de données est inférieure à la taille pour fournir la demande ; et

en réponse à la détermination que la plus grande quantité de jetons pour l'entité particulière sur l'appareil de traitement de données n'est pas inférieure à la taille pour fournir la demande, la fourniture de la demande, dans lequel la fourniture, au système d'étranglement (108), de la demande d'attribution indiquant l'entité particulière et la taille pour fournir la demande se passe en réponse à la détermination que la plus grande quantité de jetons pour l'entité particulière sur l'appareil de traitement de données est inférieure à la taille pour fournir la demande.

5. Système selon la revendication 4, dans lequel la redétermination de la détermination de manière probabiliste s'il faut ou non fournir actuellement la demande comprend :

la détermination si la plus grande quantité de jetons pour l'entité particulière sur l'appareil de traitement de données est inférieure à la taille pour fournir la demande ;

en réponse à la détermination que la plus grande quantité de jetons pour l'entité particulière sur l'appareil de traitement de données n'est pas inférieure à la taille pour fournir la demande, la fourniture de la demande ; ou

en réponse à la détermination que la plus grande quantité de jetons pour l'entité particulière sur l'appareil de traitement de données est inférieure à la taille pour fournir la demande, la réalisation de la détermination de manière probabiliste s'il faut ou non fournir actuellement la demande.

6. Système selon la revendication 1, les opérations comprenant en outre :

la détermination si la plus grande quantité de jetons est une valeur négative ;

la fourniture, au système d'étranglement (108), d'une demande d'attribution mise à jour indiquant l'entité particulière, la taille pour fournir la demande, et la plus grande quantité de jetons ;

la réception, du système d'étranglement (108), d'une attribution mise à jour ; et

l'incrémentation de la plus grande quantité de jetons par une quantité de l'attribution mise à jour.

7. Système selon la revendication 1, dans lequel la fourniture de la demande comprend :

la détermination d'une valeur de dette qui indique une différence entre la plus grande quantité de jetons et la taille pour fournir la demande ;

la détermination si la valeur de dette dépasse une limite de dette ; et

la fourniture de la demande en réponse à la détermination que la valeur de dette ne dépasse pas la limite de dette.

8. Système selon la revendication 1, dans lequel l'appareil de traitement de données comprend une partie d'un point d'extrémité (106) dans un système informatique en nuage.

9. Système selon la revendication 1, comprenant le système d'étranglement (108).

10. Système selon la revendication 1, dans lequel :

l'appareil de traitement de données comprend un dispositif dans un groupe de multiples dispositifs qui envoient chacun des demandes d'attribution au système d'étranglement (108) ; et

la réception, du système d'étranglement (108), de l'attribution pour l'entité particulière à utiliser lors de la fourniture de la demande comprend la réception d'une attribution déterminée en utilisant les demandes d'attribution reçues par le système d'étranglement (108) pour l'entité particulière à partir de chaque dispositif dans le groupe de multiples dispositifs.

11. Système selon la revendication 10, dans lequel une somme de chacune des demandes d'attribution pour l'entité particulière envoyée à chacun des dispositifs dans le groupe de multiples dispositifs est égale à un budget pour l'entité particulière.

12. Système selon la revendication 1, les opérations comprenant
la réception d'une attribution mise à jour, dans lequel la redétermination de la détermination de manière probabiliste s'il faut ou non fournir actuellement la demande comprend la détermination de manière probabiliste s'il faut ou non fournir actuellement la demande à l'aide de l'attribution mise à jour, la taille pour fournir la demande, et la plus grande quantité de jetons pour l'entité particulière sur l'appareil de traitement de données.

13. Système selon la revendication 1, dans lequel la réception de la demande pour traiter des données pour l'entité particulière comprend la réception d'une parmi une demande de lecture ou une demande d'écriture ; ou dans lequel la réception de la demande pour traiter des données pour l'entité particulière comprend la réception d'une demande pour un utilisateur particulier ; ou dans lequel la réception de la demande pour traiter des données pour l'entité particulière comprend la réception d'une demande pour une entreprise particulière.

14. Système selon la revendication 1, dans lequel la fourniture de la demande comprend :

la détermination d'une réponse à la demande ; et

la fourniture de la réponse au dispositif client (104).

15. Système selon la revendication 1, dans lequel la redétermination de la détermination de manière probabiliste s'il faut ou non fournir actuellement la demande comprend la redétermination de la détermination de manière probabiliste s'il faut ou non fournir actuellement la demande jusqu'à ce que la période de temps prédéterminé est passée.

16. Système selon la revendication 1, dans lequel :

la détermination de la taille pour fournir la demande comprend la détermination d'une taille de données à traiter lors de la fourniture de la demande ;
la fourniture, au système d'étranglement (108), de la demande d'attribution indiquant l'entité particulière et la taille pour fournir la demande comprend la fourniture, au système d'étranglement (108), d'une demande d'attribution de la bande passante indiquant l'entité particulière et la taille de données à traiter lors de la fourniture de la demande ;
la réception, du système d'étranglement (108), de l'attribution pour l'entité particulière à utiliser lors de la fourniture de la demande comprend la réception, du système d'étranglement (108), d'une attribution de la bande passante pour l'entité particulière à utiliser lors de la fourniture de la demande ; et
la détermination de manière probabiliste s'il faut ou non fournir actuellement la demande sur base de l'attribution, la taille pour fournir la demande, et la plus grande quantité de jetons pour l'entité particulière sur l'appareil de traitement de données comprend la détermination de manière probabiliste s'il faut ou non fournir actuellement la demande sur base de l'attribution de la bande passante, la taille des données à traiter, et la plus grande quantité de jetons pour l'entité particulière sur l'appareil de traitement de données.

17. Système selon la revendication 1, dans lequel :

la détermination de la taille pour fournir la demande comprend la détermination d'une quantité de demandes à traiter par un point d'extrémité (106) qui inclut l'appareil de traitement de données pour l'entité particulière ;
la fourniture, au système d'étranglement (108), de la demande d'attribution indiquant l'entité particulière et la taille pour fournir la demande comprend la fourniture, au système d'étranglement (108), d'une demande d'attribution indiquant l'entité particulière et la quantité de demandes à traiter par le point d'extrémité (106) pour l'entité particulière ; et
la détermination de manière probabiliste s'il faut ou non fournir actuellement la demande sur base de l'attribution, la taille pour fournir la demande, et la plus grande quantité de jetons pour l'entité particulière sur l'appareil de traitement de données comprend la détermination de manière probabiliste s'il faut ou non fournir actuellement la demande sur base de l'attribution, une valeur d'une pour la demande à fournir, et la plus grande quantité de jetons pour l'entité particulière sur l'appareil de traitement de données.

18. Support de stockage lisible par ordinateur non transitoire stockant des instructions exécutables par un appareil de traitement de données et qu'à la suite d'une telle exécution, font que l'appareil de traitement de données réalise des opérations comprenant :
pour chacune des multiples demandes pour traiter des données

la réception, d'un dispositif client (104) pour une entité particulière, de la demande pour traiter des données ; et
la détermination d'une taille pour fournir la demande ; pour chaque demande dans un ensemble des multiples demandes pour traiter des données, l'ensemble incluant au moins deux ou plusieurs demandes pour traiter des données, chaque demande dans l'ensemble de multiples demandes correspondant à une entité dans un ensemble d'entités qui inclut deux ou plusieurs entités :

la fourniture, à un système d'étranglement (108), d'une demande d'attribution indiquant l'entité particulière et la taille pour fournir la demande ;
la réception, du système d'étranglement (108), d'une attribution pour l'entité particulière à utiliser lors de la fourniture de la demande ; et
la détermination de manière probabiliste s'il faut ou non fournir actuellement la demande sur base de l'attribution, la taille pour fournir la demande, et une plus grande quantité de jetons pour l'entité particulière sur l'appareil de traitement de données ;

dans lequel la détermination de manière probabiliste provoque, pour chaque demande d'un premier sous-ensemble de demandes issu de l'ensemble, en réponse à la détermination de manière probabiliste de fournir actuellement la demande

la fourniture de la demande, dans lequel la taille pour fournir la demande est déduite de la plus grande quantité de jetons ; et
dans lequel la détermination de manière probabiliste provoque, pour chaque demande d'un deuxième sous-ensemble de demandes issu de l'ensemble, en réponse à la détermination de manière probabiliste de ne pas fournir actuellement la demande :

la détermination si une période de temps prédéterminé est passée ;
en réponse à la détermination que la période de temps prédéterminé est passée, l'envoi d'un message au dispositif client indiquant que la demande ne sera pas donnée ; ou
en réponse à la détermination que la période de temps prédéterminé n'est pas passée :

l'incrémentation de la plus grande quantité de jetons par une quantité de l'attribution ; et
la redétermination de la détermination de manière probabiliste s'il faut ou non fournir actuellement la demande.

19. Procédé implémenté par ordinateur, comprenant :
pour chacune des multiples demandes pour traiter des données

la réception (202), d'un dispositif client pour une entité particulière, de la demande pour traiter des données ; et
la détermination (204) d'une taille pour fournir la demande ;
pour chaque demande dans un ensemble des multiples demandes pour traiter des données, l'ensemble incluant au moins deux ou plusieurs demandes pour traiter des données, chaque demande dans l'ensemble de multiples demandes correspondant à une entité dans un ensemble d'entités qui inclut deux ou plusieurs entités :

la fourniture (206), à un système d'étranglement, d'une demande d'attribution indiquant l'entité particulière et la taille pour fournir la demande ;
la réception (208), du système d'étranglement, d'une attribution pour l'entité particulière à utiliser lors de la fourniture de la demande ; et
la détermination de manière probabiliste (210) s'il faut ou non fournir actuellement la demande sur base de l'attribution, la taille pour fournir la demande, et une plus grande quantité de jetons pour l'entité particulière sur l'appareil de traitement de données ;

dans lequel la détermination de manière probabiliste provoque, pour chaque demande d'un premier sous-ensemble de demandes issu de l'ensemble, en réponse à la détermination de manière probabiliste de fournir actuellement la demande

la fourniture (214) de la demande, dans lequel la taille pour fournir la demande est déduite de la plus grande quantité de jetons ; et
dans lequel la détermination de manière probabiliste provoque, pour chaque demande d'un deuxième sous-ensemble de demandes issu de l'ensemble, en réponse à la détermination de manière probabiliste de ne pas fournir actuellement la demande :

la détermination (216) si une période de temps prédéterminé est passée ;
en réponse à la détermination que la période de temps prédéterminé est passée, l'envoi (218) d'un message au dispositif client indiquant que la demande ne sera pas donnée ; ou
en réponse à la détermination que la période de temps prédéterminé n'est pas passée :

l'incrémentation (220) de la plus grande quantité de jetons par une quantité de l'attribution ; et
la redétermination de la détermination de manière probabiliste s'il faut ou non fournir actuellement la demande.

FIG. 1

*200*

Receive, from a client device for a particular entity, a request to process data **202**

Determine a size of data to be processed when serving the request **204**

Provide, to a throttler system, a bandwidth assignment request indicating the particular entity and the size of data to be processed when serving the request **206**

Receive, from the throttler system, a bandwidth assignment for the particular entity to use when serving the request **208**

Probabilistically determine a value that indicates whether to currently serve the request based on the bandwidth assignment, the size of the data to be processed, and an accrued quantity of tokens for the particular entity **210**

Serve the request **214**

Yes

Does the value indicate that the request should be served? **212**

No

Has a predetermined period of time has passed? **216**

Yes

No

Send a message to the client device indicating that the request will not be served **218**

Increment the accrued quantity of tokens by a quantity of the bandwidth assignment **220**

FIG. 2

*300*

Is an accrued quantity of tokens for a
particular entity less than a size of data to be processed
for a request?
**302**

No        Yes

| Serve the request |
|---|
| **304** |

| Provide, to a throttler system, a bandwidth assignment request |
|---|
| **306** |

FIG. 3

*400*

| Determine whether an accrued quantity of tokens for a particular entity is a negative value    **402** |
|---|

| Provide, to a throttler system, a bandwidth assignment request indicating the particular entity and the accrued quantity of tokens    **404** |
|---|

| Receive, from the throttler system, a bandwidth assignment for the particular entity    **406** |
|---|

| Increment the accrued quantity of tokens by a quantity of the bandwidth assignment    **408** |
|---|

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2618541 A